(19) Europäisches Patentamt
European Patent Office
Office européen des brevets

(11) EP 4 474 349 A1

(12) **EUROPEAN PATENT APPLICATION**
published in accordance with Art. 153(4) EPC

(43) Date of publication:
**11.12.2024 Bulletin 2024/50**

(21) Application number: **23746825.1**

(22) Date of filing: **19.01.2023**

(51) International Patent Classification (IPC):
***C01B 32/174*** *(2017.01)* ***C08K 3/013*** *(2018.01)*
***C08K 3/04*** *(2006.01)* ***C08K 7/06*** *(2006.01)*
***C08L 101/06*** *(2006.01)* ***C08L 101/08*** *(2006.01)*
***H01B 1/04*** *(2006.01)* ***H01M 4/13*** *(2010.01)*
***H01M 4/134*** *(2010.01)* ***H01M 4/62*** *(2006.01)*
***H01M 4/66*** *(2006.01)*

(52) Cooperative Patent Classification (CPC):
**C01B 32/174; C08K 3/013; C08K 3/04; C08K 7/06; C08L 101/06; C08L 101/08; H01B 1/04; H01M 4/13; H01M 4/134; H01M 4/62; H01M 4/66;**
Y02E 60/10

(86) International application number:
**PCT/JP2023/001577**

(87) International publication number:
**WO 2023/145612 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.01.2022 JP 2022013703**

(71) Applicant: **Zeon Corporation**
**Tokyo 100-8246 (JP)**

(72) Inventors:
- **IJIRO Kohei**
  **Tokyo 100-8246 (JP)**
- **OSHIMA Hiroki**
  **Tokyo 100-8246 (JP)**

(74) Representative: **Maiwald GmbH**
**Elisenhof**
**Elisenstraße 3**
**80335 München (DE)**

(54) **CARBON NANOTUBE LIQUID DISPERSION, SLURRY FOR NEGATIVE ELECTRODES FOR NONAQUEOUS SECONDARY BATTERIES, NEGATIVE ELECTRODE FOR NONAQUEOUS SECONDARY BATTERIES, AND NONAQUEOUS SECONDARY BATTERY**

(57) Provided is a CNT dispersion liquid having excellent CNT dispersibility and storage stability. The carbon nanotube dispersion liquid contains carbon nanotubes, a water-soluble polymer including an acid functional group, and water. An HSP distance ($R_a$) between Hansen solubility parameters ($HSP_c$) of the carbon nanotubes and Hansen solubility parameters ($HSP_d$) of the water-soluble polymer is 7.0 $MPa^{112}$ or less.

EP 4 474 349 A1

## Description

TECHNICAL FIELD

The present disclosure relates to a carbon nanotube dispersion liquid, a slurry for a non-aqueous secondary battery negative electrode, a negative electrode for a non-aqueous secondary battery, and a non-aqueous secondary battery.

BACKGROUND

Carbon nanotubes (hereinafter, also referred to as "CNTs") have various excellent characteristics such as mechanical strength, optical characteristics, electrical characteristics, thermal characteristics, and molecule adsorption capacity, and thus are used in various electronic products such as electronic components (for example, electronic circuits such as logic circuits, memory such as DRAM, SRAM, and NRAM, semiconductor devices, interconnects, complementary MOS, and bipolar transistors); chemical sensors (detectors, etc.) for trace gases etc.; and biosensors (measurement instruments, etc.) for DNA, protein, etc.

In recent years, CNTs have also been used as conductive materials in slurries for secondary battery electrodes that are used in the formation of an electrode mixed material layer included in an electrode of a non-aqueous secondary battery (hereinafter, also referred to simply as a "secondary battery") such as a lithium ion secondary battery. An electrode of a secondary battery displays significant expansion and contraction due to charging and discharging, and this results in reduction of electrical conductivity of the electrode and deterioration of cycle characteristics of the secondary battery. However, by using CNTs as a conductive material of a slurry for a secondary battery electrode, it is possible to suppress reduction of electrical conductivity and obtain a secondary battery having excellent cycle characteristics.

When using CNTs, it is necessary to disperse the CNTs in a solvent from a viewpoint of causing characteristics of the CNTs to be adequately displayed, and dispersion liquids that contain CNTs have been proposed. As one example, Patent Literature (PTL) 1 proposes a conductive material dispersion liquid that contains CNTs, a dispersant, and an organic solvent as a dispersion medium and in which a Hansen solubility parameter (HSP) distance between the CNTs and the dispersant is not more than a specific value.

On the other hand, it is desirable to use water instead of an organic solvent in dispersion of CNTs from a viewpoint of environmental impact and operability. However, it is extremely difficult to obtain a CNT dispersion liquid having CNTs dispersed in water due to the low affinity of CNTs with water.

For this reason, there has been ongoing development, in recent years, of water-containing CNT dispersion liquids that have excellent CNT dispersibility and storage stability. For example, PTL 2 proposes, as such a CNT dispersion liquid, a CNT dispersion liquid that contains CNTs, carboxymethyl cellulose or a salt thereof, and water, and in which the carboxymethyl cellulose or salt thereof has a weight-average molecular weight of 10,000 to 100,000 and a degree of etherification of 0.5 to 0.9, and the CNT dispersion liquid has a product ($X \times Y$) of complex modulus of elasticity X (Pa) and phase angle Y (°) of not less than 100 and not more than 1,500.

CITATION LIST

Patent Literature

PTL 1: WO2021/200126A1
PTL 2: JP6860740B1

SUMMARY

(Technical Problem)

There is demand for further improvement of carbon nanotube dispersibility and storage stability in carbon nanotube dispersion liquids that contain water.

Accordingly, one object of the present disclosure is to provide a carbon nanotube dispersion liquid having excellent carbon nanotube dispersibility and storage stability.

Another object of the present disclosure is to provide a slurry for a non-aqueous secondary battery negative electrode containing this carbon nanotube dispersion liquid.

Another object of the present disclosure is to provide a negative electrode for a non-aqueous secondary battery

for which this slurry for a non-aqueous secondary battery negative electrode is used.

Another object of the present disclosure is to provide a non-aqueous secondary battery including this negative electrode for a non-aqueous secondary battery.

(Solution to Problem)

The inventors conducted diligent investigation with the aim of solving the problem set forth above. The inventors made a new discovery that in the case of a carbon nanotube dispersion liquid that contains carbon nanotubes, a water-soluble polymer including an acid functional group (hereinafter, the "water-soluble polymer including an acid functional group" may also be referred to simply as a "water-soluble polymer"), and water and that has an HSP distance ($R_a$) between Hansen solubility parameters ($HSP_c$) of the carbon nanotubes and Hansen solubility parameters ($HSP_d$) of the water-soluble polymer of not more than a specific value, this carbon nanotube dispersion liquid has excellent carbon nanotube dispersibility and storage stability. In this manner, the inventors completed the present disclosure.

Specifically, with the aim of advantageously solving the problem set forth above, a presently disclosed carbon nanotube dispersion liquid comprises: carbon nanotubes; a water-soluble polymer including an acid functional group; and water, wherein an HSP distance ($R_a$) between Hansen solubility parameters ($HSP_c$) of the carbon nanotubes and Hansen solubility parameters ($HSP_d$) of the water-soluble polymer is 7.0 $MPa^{1/2}$ or less. In the case of a carbon nanotube dispersion liquid such as set forth above, it is possible to obtain a carbon nanotube dispersion liquid having excellent carbon nanotube dispersibility and storage stability.

Note that the "Hansen solubility parameters ($HSP_c$) of carbon nanotubes" referred to in the present specification are composed of a polarity term $\delta_{p1}$, a dispersion term $\delta_{d1}$, and a hydrogen bonding term $\delta_{h1}$, and that the "Hansen solubility parameters ($HSP_d$) of a water-soluble polymer" referred to in the present specification are composed of a polarity term $\delta_{p2}$, a dispersion term $\delta_{d2}$, and a hydrogen bonding term $\delta_{h2}$. Moreover, "$\delta_{p1}$", "$\delta_{d1}$", "$\delta_{h1}$", "$\delta_{p2}$", "$\delta_{d2}$", and "$\delta_{h2}$" referred to in the present specification can be determined by a method described in the EXAMPLES section. Furthermore, the "HSP distance ($R_a$)" referred to in the present specification can be calculated by the following formula (1).

$$\text{HSP distance } (R_a) = \{(\delta_{p1} - \delta_{p2})^2 + 4 \times (\delta_{d1} - \delta_{d2})^2 + (\delta_{h1} - \delta_{h2})^2\}^{1/2} \cdots (1)$$

When a polymer is said to be "water-soluble" in the present specification, this means that when 0.5 g of the polymer is dissolved in 100 g of water at a temperature of 25°C, insoluble content is less than 1.0 mass%.

The units of the polarity term $\delta_p$, the dispersion term $\delta_d$, and the hydrogen bonding term $\delta_h$ referred to in the present specification are "$MPa^{1/2}$", and there are cases in which these units are omitted below.

In the presently disclosed carbon nanotube dispersion liquid, an HSP distance ($R_b$) between the Hansen solubility parameters ($HSP_d$) of the water-soluble polymer and Hansen solubility parameters ($HSP_m$) of a material having a polarity term $\delta_{p3}$ of 10.7 $MPa^{1/2}$, a dispersion term $\delta_{d3}$ of 18.6 $MPa^{1/2}$, and a hydrogen bonding term $\delta_{h3}$ of 7.0 $MPa^{1/2}$ is preferably 8.0 $MPa^{1/2}$ or less.

When the HSP distance ($R_b$) is not more than the upper limit set forth above, peel strength of an electrode mixed material layer from a current collector can be improved in a situation in which a negative electrode for a non-aqueous secondary battery is produced using a slurry for a non-aqueous secondary battery negative electrode that contains the carbon nanotube dispersion liquid.

Note that "$\delta_{p3}$", "$\delta_{d3}$", and "$\delta_{h3}$" referred to in the present specification are values determined by a method described in the EXAMPLES section. Moreover, the "HSP distance ($R_b$)" referred to in the present specification can be calculated by the following formula (2).

$$\text{HSP distance } (R_b) = \{(\delta_{p2} - 10.7)^2 + 4 \times (\delta_{d2} - 18.6)^2 + (\delta_{h2} - 7.0)^2\}^{1/2} \cdots (2)$$

The presently disclosed carbon nanotube dispersion liquid preferably has a pH of not lower than 6 and not higher than 10.

When the pH is within the range set forth above, viscosity stability of a slurry for a non-aqueous secondary battery negative electrode that contains the carbon nanotube dispersion liquid can be improved, and cycle characteristics of a non-aqueous secondary battery that includes a negative electrode for a non-aqueous secondary battery produced using the slurry for a non-aqueous secondary battery negative electrode can be improved.

In the presently disclosed carbon nanotube dispersion liquid, the acid functional group of the water-soluble polymer is preferably at least partially in the form of an alkali metal salt group or an ammonium salt group.

When the acid functional group of the water-soluble polymer is at least partially in the form of an alkali metal salt group or an ammonium salt group, dispersibility and storage stability of the carbon nanotube dispersion liquid can be improved, viscosity stability of a slurry for a non-aqueous secondary battery negative electrode that contains the carbon nanotube dispersion liquid can be improved, and cycle characteristics of a non-aqueous secondary battery that includes a negative electrode for a non-aqueous secondary battery produced using the slurry for a non-aqueous secondary battery negative electrode can be improved.

In the presently disclosed carbon nanotube dispersion liquid, the acid functional group is preferably a carboxy group.

When the acid functional group is a carboxy group, dispersibility and storage stability of the carbon nanotube dispersion liquid can be improved, viscosity stability of a slurry for a non-aqueous secondary battery negative electrode that contains the carbon nanotube dispersion liquid can be improved, and cycle characteristics of a non-aqueous secondary battery that includes a negative electrode for a non-aqueous secondary battery produced using the slurry for a non-aqueous secondary battery negative electrode can be improved. In addition, dispersibility and storage stability of the carbon nanotube dispersion liquid can be maintained regardless of the type of carbon nanotubes.

In the presently disclosed carbon nanotube dispersion liquid, the acid functional group is preferably a sulfo group.

When the acid functional group is a sulfo group, dispersibility and storage stability of the carbon nanotube dispersion liquid can be improved, viscosity stability of a slurry for a non-aqueous secondary battery negative electrode that contains the carbon nanotube dispersion liquid can be improved, and cycle characteristics of a non-aqueous secondary battery that includes a negative electrode for a non-aqueous secondary battery produced using the slurry for a non-aqueous secondary battery negative electrode can be improved.

In the presently disclosed carbon nanotube dispersion liquid, the water-soluble polymer preferably includes an ether group.

When the water-soluble polymer includes an ether group, dispersibility and storage stability of the carbon nanotube dispersion liquid can be improved, viscosity stability of a slurry for a non-aqueous secondary battery negative electrode that contains the carbon nanotube dispersion liquid can be improved, and cycle characteristics of a non-aqueous secondary battery that includes a negative electrode for a non-aqueous secondary battery produced using the slurry for a non-aqueous secondary battery negative electrode can be improved.

In the presently disclosed carbon nanotube dispersion liquid, a mass ratio of the carbon nanotubes relative to the water-soluble polymer is preferably not less than 0.1 and not more than 10.

When the mass ratio of the carbon nanotubes relative to the water-soluble polymer is within the range set forth above, storage stability of the carbon nanotube dispersion liquid can be improved.

Moreover, with the aim of advantageously solving the problem set forth above, a presently disclosed slurry for a non-aqueous secondary battery negative electrode comprises: a negative electrode active material; and the carbon nanotube dispersion liquid set forth above. In the case of a slurry for a non-aqueous secondary battery negative electrode such as set forth above, it is possible to obtain a slurry for a non-aqueous secondary battery negative electrode that has excellent viscosity stability and that is capable of forming a negative electrode that can cause a non-aqueous secondary battery to display excellent cycle characteristics.

In the presently disclosed slurry for a non-aqueous secondary battery negative electrode, the negative electrode active material preferably includes a silicon-based negative electrode active material.

When the negative electrode active material includes a silicon-based negative electrode active material (negative electrode active material containing silicon), the capacity of a non-aqueous secondary battery that includes a negative electrode for a non-aqueous secondary battery produced using the slurry for a non-aqueous secondary battery negative electrode can be increased. Note that although silicon-based negative electrode active materials display particularly large expansion and contraction in accompaniment to charging and discharging, the presently disclosed slurry for a negative electrode is, as a result of being produced using the presently disclosed carbon nanotube dispersion liquid set forth above, capable of forming a negative electrode in which reduction of electrical conductivity of an electrode mixed material layer is suppressed and that can cause a non-aqueous secondary battery to display even better cycle characteristics even in a situation in which a silicon-based negative electrode active material is used as the negative electrode active material.

It is preferable that the presently disclosed slurry for a non-aqueous secondary battery negative electrode further comprises a particulate polymer and that the particulate polymer includes a carboxy group-containing monomer unit, an aromatic vinyl monomer unit, and a conjugated diene monomer unit.

In the case of the slurry for a non-aqueous secondary battery negative electrode set forth above, it is possible to improve cycle characteristics of a non-aqueous secondary battery that includes a negative electrode for a non-aqueous secondary battery produced using the slurry for a non-aqueous secondary battery negative electrode.

When a polymer is said to "include a monomer unit" in the present specification, this means that "a polymer obtained using that monomer includes a repeating unit derived from the monomer".

In the presently disclosed slurry for a non-aqueous secondary battery negative electrode, proportional content of

the carboxy group-containing monomer unit in the particulate polymer when all repeating units included in the particulate polymer are taken to be 100 mass% is preferably not less than 3 mass% and not more than 30 mass%.

When the proportional content of the carboxy group-containing monomer unit in the particulate polymer is within the range set forth above, cycle characteristics of a non-aqueous secondary battery that includes a negative electrode for a non-aqueous secondary battery produced using the slurry for a non-aqueous secondary battery negative electrode can be further improved.

The proportional content of a repeating unit (monomer unit) in a polymer referred to in the present specification can be measured by a nuclear magnetic resonance (NMR) method such as $^1$H-NMR or $^{13}$C-NMR.

In the presently disclosed slurry for a non-aqueous secondary battery negative electrode, an HSP distance ($R_c$) between the Hansen solubility parameters ($HSP_d$) of the water-soluble polymer and Hansen solubility parameters ($HSP_b$) of the particulate polymer is preferably 7.0 MPa$^{1/2}$ or less.

When the HSP distance ($R_c$) is not more than the upper limit set forth above, cycle characteristics of a non-aqueous secondary battery that includes a negative electrode for a non-aqueous secondary battery produced using the slurry for a non-aqueous secondary battery negative electrode can be improved.

The "Hansen solubility parameters ($HSP_b$) of a particulate polymer" referred to in the present specification are composed of a polarity term $\delta_{p4}$, a dispersion term $\delta_{d4}$, and a hydrogen bonding term $\delta_{h4}$. Note that "$\delta_{p4}$", "$\delta_{d4}$", and "$\delta_{h4}$" can be determined by a method described in the EXAMPLES section. Moreover, the "HSP distance ($R_c$)" referred to in the present specification can be calculated by the following formula (3).

$$\text{HSP distance } (R_c) = \{(\delta_{p2} - \delta_{p4})^2 + 4 \times (\delta_{d2} - \delta_{d4})^2 + (\delta_{h2} - \delta_{h4})^2\}^{1/2} \cdots (3)$$

Furthermore, with the aim of advantageously solving the problem set forth above, a presently disclosed negative electrode for a non-aqueous secondary battery comprises: a current collector; and a negative electrode mixed material layer formed on the current collector using the slurry for a non-aqueous secondary battery negative electrode set forth above. In the case of a negative electrode for a non-aqueous secondary battery such as set forth above, it is possible to obtain a negative electrode for a non-aqueous secondary battery that can cause a non-aqueous secondary battery to display excellent cycle characteristics.

In the presently disclosed negative electrode for a non-aqueous secondary battery, the current collector is preferably electrolytic copper foil.

When the current collector is electrolytic copper foil, peel strength of the electrode mixed material layer from the current collector can be improved.

Also, with the aim of advantageously solving the problem set forth above, a presently disclosed non-aqueous secondary battery comprises the negative electrode for a non-aqueous secondary battery set forth above. In the case of a non-aqueous secondary battery such as set forth above, it is possible to obtain a non-aqueous secondary battery having excellent cycle characteristics.

(Advantageous Effect)

According to the present disclosure, it is possible to provide a carbon nanotube dispersion liquid having excellent carbon nanotube dispersibility and storage stability.

Moreover, according to the present disclosure, it is possible to provide a slurry for a non-aqueous secondary battery negative electrode containing this carbon nanotube dispersion liquid.

Furthermore, according to the present disclosure, it is possible to provide a negative electrode for a non-aqueous secondary battery for which this slurry for a non-aqueous secondary battery negative electrode is used.

Also, according to the present disclosure, it is possible to provide a non-aqueous secondary battery including this negative electrode for a non-aqueous secondary battery.

## DETAILED DESCRIPTION

The following provides a detailed description of embodiments of the present disclosure.

The presently disclosed CNT dispersion liquid can be used as a material in production of a slurry for a non-aqueous secondary battery negative electrode (hereinafter, also referred to simply as a "slurry for a negative electrode"), for example, but is not specifically limited thereto. Moreover, the presently disclosed slurry for a negative electrode is produced using the presently disclosed CNT dispersion liquid. Furthermore, a feature of the presently disclosed negative electrode for a non-aqueous secondary battery (hereinafter, also referred to simply as a "negative electrode") is that it includes a negative electrode mixed material layer formed using the presently disclosed slurry for a negative electrode.

Also, a feature of the presently disclosed non-aqueous secondary battery is that it includes the presently disclosed negative electrode. Note that the presently disclosed CNT dispersion liquid can also be used as a raw material of a composite material that contains a resin and CNTs or in production of an electronic product or the like.

(CNT dispersion liquid)

The presently disclosed CNT dispersion liquid contains CNTs, a water-soluble polymer including an acid functional group, and water and optionally contains other components. Note that the CNT dispersion liquid does not normally contain an electrode active material (positive electrode active material or negative electrode active material).

In the presently disclosed CNT dispersion liquid, an HSP distance ($R_a$) between Hansen solubility parameters ($HSP_c$) of the CNTs and Hansen solubility parameters ($HSP_d$) of the water-soluble polymer is 7.0 $MPa^{1/2}$ or less. In the case of a CNT dispersion liquid such as set forth above, it is possible to obtain a CNT dispersion liquid having excellent CNT dispersibility and storage stability. Although the reason for these effects is not necessarily clear, it is presumed to be related to affinity between the CNTs and the water-soluble polymer, affinity between the water-soluble polymer and water, electrostatic repulsion due to the presence of the acid functional group of the water-soluble polymer, and so forth. However, the subsequently described examples and comparative examples clearly demonstrate that a CNT dispersion liquid has excellent dispersibility and storage stability when the HSP distance ($R_a$) between Hansen solubility parameters ($HSP_c$) of CNTs and Hansen solubility parameters ($HSP_d$) of a water-soluble polymer in the CNT dispersion liquid is 7.0 $MPa^{1/2}$ or less.

Moreover, in the case of the CNT dispersion liquid set forth above, it is possible to obtain a slurry for a negative electrode that has excellent viscosity stability and that is capable of forming a negative electrode that can cause a secondary battery to display excellent cycle characteristics.

Note that the HSP distance ($R_a$) can be adjusted through appropriate alteration of $HSP_c$ (polarity term $\delta_{p1}$, dispersion term $\delta_{d1}$, and hydrogen bonding term $\delta_{h1}$) of the CNTs and $HSP_d$ (polarity term $\delta_{p2}$, dispersion term $\delta_{d2}$, and hydrogen bonding term $\delta_{h2}$) of the water-soluble polymer. The HSP of a polymer can be adjusted by appropriately selecting monomers of known HSP and polymerizing these monomers in combination. The HSP of a monomer can be obtained, for example, through reference to a database of "HSPiP ver. 5.3.04".

The HSP distance ($R_a$) is preferably 6.0 $MPa^{1/2}$ or less, more preferably 5.0 $MPa^{1/2}$ or less, and even more preferably 4.5 $MPa^{1/2}$ or less.

When the HSP distance ($R_a$) is not more than any of the upper limits set forth above, dispersibility and storage stability of the CNT dispersion liquid can be improved, viscosity stability of a slurry for a negative electrode that contains the CNT dispersion liquid can be improved, and cycle characteristics of a secondary battery that includes a negative electrode produced using the slurry for a negative electrode can be improved.

On the other hand, the HSP distance ($R_a$) may be 0.1 $MPa^{1/2}$ or more, or may be 1.0 $MPa^{1/2}$ or more, for example.

In the presently disclosed CNT dispersion liquid, an HSP distance ($R_b$) between the Hansen solubility parameters ($HSP_d$) of the water-soluble polymer and Hansen solubility parameters ($HSP_m$) of a material having a polarity term $\delta_{p3}$ of 10.7, a dispersion term $\delta_{d3}$ of 18.6, and a hydrogen bonding term $\delta_{h3}$ of 7.0 is preferably 8.0 $MPa^{1/2}$ or less, more preferably 5.0 $MPa^{1/2}$ or less, and even more preferably 4.0 $MPa^{1/2}$ or less.

Since the material of a current collector of a negative electrode in a secondary battery is typically a material having Hansen solubility parameters that are close to the Hansen solubility parameters ($HSP_d$), the HSP distance ($R_b$) being not more than any of the upper limits set forth above makes it possible to improve peel strength of an electrode mixed material layer from a current collector in a situation in which a negative electrode is produced using a slurry for a negative electrode that contains the CNT dispersion liquid.

On the other hand, the HSP distance ($R_b$) may be 0.1 $MPa^{1/2}$ or more, or may be 1.0 $MPa^{1/2}$ or more, for example.

Note that the HSP distance ($R_b$) can be adjusted through appropriate alteration of $HSP_d$ (polarity term $\delta_{p2}$, dispersion term $\delta_{d2}$, and hydrogen bonding term $\delta_{h2}$) of the water-soluble polymer.

Also note that the material having a polarity term $\delta_{p3}$ of 10.7, a dispersion term $\delta_{d3}$ of 18.6, and a hydrogen bonding term $\delta_{h3}$ of 7.0 may be electrolytic copper foil or the like, for example. The term "electrolytic copper foil" refers to copper foil that is obtained by, for example, immersing a metal drum in an electrolyte solution in which copper ions are dissolved, rotating the drum while passing electrical current so as to cause deposition of copper on the surface of the drum, and then peeling off the deposited copper.

The pH of the presently disclosed CNT dispersion liquid is preferably 6 or higher, more preferably 7 or higher, and even more preferably 7.5 or higher, and is preferably 10 or lower, more preferably 9 or lower, and even more preferably 8.5 or lower.

When the pH is within any of the ranges set forth above, viscosity stability of a slurry for a negative electrode that contains the CNT dispersion liquid can be improved, and cycle characteristics of a secondary battery that includes a negative electrode produced using the slurry for a negative electrode can be improved.

In the presently disclosed CNT dispersion liquid, a mass ratio of the CNTs relative to the water-soluble polymer

(CNTs/water-soluble polymer) is preferably 0.1 or more, more preferably 0.5 or more, and even more preferably 1.5 or more, and is preferably 10 or less, more preferably 8 or less, and even more preferably 5 or less.

When the mass ratio of the CNTs relative to the water-soluble polymer is within any of the ranges set forth above, storage stability of the CNT dispersion liquid can be improved. In particular, in a case in which the CNT dispersion liquid contains subsequently described multi-walled CNTs, storage stability of the CNT dispersion liquid can be effectively improved through the mass ratio of the CNTs relative to the water-soluble polymer being within any of the ranges set forth above.

On the other hand, in a case in which the CNT dispersion liquid contains subsequently described single-walled CNTs, the mass ratio of the CNTs relative to the water-soluble polymer (CNTs/water-soluble polymer) is preferably 0.1 or more, more preferably 0.2 or more, and even more preferably 0.3 or more, and is preferably 10 or less, more preferably 8 or less, even more preferably 5 or less, further preferably 1 or less, and even further preferably 0.5 or less.

In a case in which the CNT dispersion liquid contains subsequently described single-walled CNTs, dispersibility and storage stability of the CNT dispersion liquid can be improved through the mass ratio of the CNTs relative to the water-soluble polymer being within any of the ranges set forth above.

<CNTs>

The CNTs may be single-walled CNTs or may be multi-walled CNTs. Moreover, single-walled CNTs and multi-walled CNTs may be used in combination as the CNTs.

The average diameter of the CNTs is preferably 0.5 nm or more, more preferably 1 nm or more, and even more preferably 2 nm or more, and is preferably 50 nm or less, more preferably 40 nm or less, and even more preferably 20 nm or less.

When the average diameter of the CNTs is within any of the ranges set forth above, dispersibility and storage stability of the CNT dispersion liquid can be improved, viscosity stability of a slurry for a negative electrode that contains the CNT dispersion liquid can be improved, and cycle characteristics of a secondary battery that includes a negative electrode produced using the slurry for a negative electrode can be improved.

The average diameter of CNTs referred to in the present specification can be determined by observing the CNTs using a transmission electron microscope (TEM), measuring the diameters (external diameters) of 50 CNTs from an obtained TEM image, and calculating an arithmetic average value of these measured values.

The ratio of G band peak intensity relative to D band peak intensity (G/D ratio) in a Raman spectrum for the CNTs is preferably 0.4 or more, more preferably 0.5 or more, and even more preferably 0.6 or more.

When the G/D ratio of the CNTs is not less than any of the lower limits set forth above, cycle characteristics of a secondary battery can be further improved. Note that the upper limit for the G/D ratio of the CNTs is not specifically limited and may be 200 or less, for example.

The "G/D ratio" of CNTs referred to in the present specification can be determined by measuring a Raman spectrum of the CNTs using a microscopic laser Raman spectrophotometer (Nicolet Almega XR produced by Thermo Fisher Scientific), determining the intensity of a G band peak observed near 1590 $cm^{-1}$ and the intensity of a D band peak observed near 1340 $cm^{-1}$ in the obtained Raman spectrum, and then calculating a ratio of these intensities.

The proportional content of the CNTs in the CNT dispersion liquid when the mass of the entire CNT dispersion liquid is taken to be 100 mass% is preferably 0.1 mass% or more, more preferably 0.3 mass% or more, and even more preferably 0.7 mass% or more.

When the proportional content of the CNTs in the CNT dispersion liquid is not less than any of the lower limits set forth above, producibility of a product obtained using the CNT dispersion liquid can be improved.

On the other hand, the proportional content of the CNTs in the CNT dispersion liquid when the mass of the entire CNT dispersion liquid is taken to be 100 mass% may be 10.0 mass% or less, may be 5.0 mass% or less, or may be 2.0 mass% or less, for example.

The CNTs can be CNTs that have been synthesized by a known CNT synthesis method such as arc discharge, laser ablation, or chemical vapor deposition (CVD) without any specific limitations.

The polarity term $\delta_{p1}$ of the CNTs may be 5 or more, may be 5.5 or more, or may be 6.0 or more, for example, and may be 8.0 or less, may be 7.5 or less, or may be 7.0 or less, for example.

Moreover, the dispersion term $\delta_{d1}$ of the CNTs may be 15.0 or more, may be 17.0 or more, or may be 18.5 or more, for example, and may be 23.0 or less, may be 21.0 or less, or may be 19.4 or less, for example.

Furthermore, the hydrogen bonding term $\delta_{h1}$ of the CNTs may be 3.0 or more, may be 4.0 or more, or may be 4.5 or more, for example, and may be 7.0 or less, may be 5.5 or less, or may be 4.8 or less, for example.

<Water-soluble polymer>

The water-soluble polymer in the presently disclosed CNT dispersion liquid is a polymer that includes an acid

functional group and that can function as a dispersant. Note that the presently disclosed CNT dispersion liquid may contain a dispersant other than the water-soluble polymer. For example, the presently disclosed CNT dispersion liquid may further contain, as a dispersant other than the water-soluble polymer, a water-soluble polymer for which the HSP distance ($R_a$) exceeds 7.0 $MPa^{1/2}$ or a water-soluble polymer for which the HSP distance is 7.0 $MPa^{1/2}$ or less but that does not include an acid functional group.

A smaller difference between the polarity term $\delta_{p2}$ of the water-soluble polymer and the polarity term $\delta_{p1}$ of the CNTs is more preferable. The polarity term $\delta_{p2}$ of the water-soluble polymer may be 3.0 or more, may be 3.5 or more, or may be 6.0 or more, for example, and may be 10.0 or less, may be 9.0 or less, or may be 8.0 or less, for example.

Moreover, a smaller difference between the dispersion term $\delta_{d2}$ of the water-soluble polymer and the dispersion term $\delta_{d1}$ of the CNTs is more preferable. The dispersion term $\delta_{d2}$ of the water-soluble polymer may be 15.0 or more, may be 17.0 or more, or may be 18.0 or more, for example, and may be 23.0 or less, may be 21.0 or less, or may be 19.0 or less, for example.

The hydrogen bonding term $\delta_{h2}$ of the water-soluble polymer is preferably 5.0 or more, more preferably 6.0 or more, and even more preferably 6.5 or more.

When the hydrogen bonding term $\delta_{h2}$ is not less than any of the lower limits set forth above, dispersibility and storage stability of the CNT dispersion liquid can be improved. Although the reason for this is not necessarily clear, it is presumed that this facilitates the formation of hydrogen bonds with water molecules and improves affinity with water.

On the other hand, the hydrogen bonding term $\delta_{h2}$ of the water-soluble polymer may be 12.0 or less, may be 10.0 or less, or may be 9.5 or less, for example.

The "acid functional group" of the water-soluble polymer encompasses a salt resulting from neutralization with a base. For example, in the case of a carboxy group, the term "acid functional group" encompasses not only -COOH, but also a neutralized form thereof such as a lithium carboxylate group ($-COO^-Li^+$). In the water-soluble polymer, the acid functional group is preferably at least partially in the form of an alkali metal salt group or an ammonium salt group because this can improve dispersibility and storage stability of the CNT dispersion liquid, can improve viscosity stability of a slurry for a negative electrode that contains the CNT dispersion liquid, and can improve cycle characteristics of a secondary battery that includes a negative electrode produced using the slurry for a negative electrode. The acid functional group may be fully in the form of an alkali metal salt group or an ammonium salt group.

The alkali metal salt group may be a lithium metal salt group, a sodium metal salt group, a potassium metal salt group, or the like, for example. A combination of two or more of these types of groups may be present.

The acid functional group of the water-soluble polymer may be a carboxy group, a sulfo group, a phosphate group, or the like, for example. A combination of two or more of these types of groups may be present.

In one embodiment, the acid functional group of the water-soluble polymer is preferably a carboxy group. When the acid functional group is a carboxy group, dispersibility and storage stability of the CNT dispersion liquid can be improved, viscosity stability of a slurry for a negative electrode that contains the CNT dispersion liquid can be improved, and cycle characteristics of a secondary battery that includes a negative electrode produced using the slurry for a negative electrode can be improved. In addition, dispersibility and storage stability of the CNT dispersion liquid can be maintained regardless of the type of CNTs.

In another embodiment, the acid functional group of the water-soluble polymer is preferably a sulfo group. When the acid functional group is a sulfo group, dispersibility and storage stability of the CNT dispersion liquid can be improved, viscosity stability of a slurry for a negative electrode that contains the CNT dispersion liquid can be improved, and cycle characteristics of a secondary battery that includes a negative electrode produced using the slurry for a negative electrode can be improved.

The water-soluble polymer preferably includes an ether group. The "ether group" referred to here is a group that is represented by "-R’OR-". Moreover, R and R’ each represent a linear or branched hydrocarbon group (preferably an alkyl group) having a carbon number of not less than 1 and not more than 10 and may each be the same or different. The carbon number of R and R’ is preferably not less than 2 and not more than 5, preferably 2 or 3, and more preferably 2.

When the water-soluble polymer includes an ether group, dispersibility and storage stability of the CNT dispersion liquid can be improved, viscosity stability of a slurry for a negative electrode that contains the CNT dispersion liquid can be improved, and cycle characteristics of a secondary battery that includes a negative electrode produced using the slurry for a negative electrode can be improved.

The following describes the water-soluble polymer that is contained in the presently disclosed CNT dispersion liquid using a first embodiment, a second embodiment, and a third embodiment as examples, but the water-soluble polymer is not limited to these embodiments.

{Water-soluble polymer of first embodiment}

A water-soluble polymer of the first embodiment includes a carboxy group-containing monomer unit and a conjugated diene monomer unit. Note that the water-soluble polymer of the first embodiment may include repeating units

other than the carboxy group-containing monomer unit and the conjugated diene monomer unit (i.e., other repeating units).

[Carboxy group-containing monomer unit]

The carboxy group-containing monomer unit is a repeating unit that includes a carboxy group (-COOH). Note that in the CNT dispersion liquid, the carboxy group of the carboxy group-containing monomer unit is preferably partially or fully in the form of at least any one of a sodium carboxylate group ($-COO^-Na^+$), a lithium carboxylate group ($-COO^-Li^+$), and an ammonium carboxylate group ($-COO^-NH_4^+$). When the carboxy group is in the form of at least any one of the carboxylate salt groups set forth above, dispersibility and storage stability of the CNT dispersion liquid can be further improved, viscosity stability of a slurry for a negative electrode that contains the CNT dispersion liquid can be further improved, and cycle characteristics of a secondary battery that includes a negative electrode produced using the slurry for a negative electrode can be further improved.

Examples of carboxy group-containing monomers that can form the carboxy group-containing monomer unit of the water-soluble polymer of the first embodiment include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Moreover, an acid anhydride that produces a carboxy group through hydrolysis can also be used as a carboxy group-containing monomer.

One carboxy group-containing monomer may be used individually, or two or more carboxy group-containing monomers may be used in combination. Acrylic acid and methacrylic acid are preferable as the carboxy group-containing monomer from a viewpoint of improving cycle characteristics of a secondary battery. In other words, the water-soluble polymer of the first embodiment preferably includes either or both of an acrylic acid unit and a methacrylic acid unit as the carboxy group-containing monomer unit.

The proportional content of the carboxy group-containing monomer unit in the water-soluble polymer of the first embodiment when all repeating units included in the water-soluble polymer of the first embodiment are taken to be 100 mass% is preferably 30 mass% or more, more preferably 40 mass% or more, and even more preferably 50 mass% or more, and is preferably 95 mass% or less, more preferably 90 mass% or less, even more preferably 80 mass% or less, and further preferably 70 mass% or less.

Moreover, the proportional content of the carboxy group-containing monomer unit in the water-soluble polymer of the first embodiment when all repeating units included in the water-soluble polymer of the first embodiment are taken to be 100 mol% is preferably 30 mol% or more, more preferably 40 mol% or more, and even more preferably 50 mol% or more, and is preferably 90 mol% or less, more preferably 80 mol% or less, even more preferably 70 mol% or less, and further preferably 60 mol% or less.

When the proportional content of the carboxy group-containing monomer unit in the water-soluble polymer of the first embodiment is within any of the ranges set forth above, dispersibility and storage stability of the CNT dispersion liquid can be further improved, viscosity stability of a slurry for a negative electrode that contains the CNT dispersion liquid can be further improved, and cycle characteristics of a secondary battery that includes a negative electrode produced using the slurry for a negative electrode can be further improved.

[Conjugated diene monomer unit]

Examples of conjugated diene monomers that can form the conjugated diene monomer unit of the water-soluble polymer of the first embodiment include 1,3-butadiene, isoprene (2-methyl-1,3-butadiene), 2,3-dimethyl-1,3-butadiene, and 1,3-pentadiene. One of these conjugated diene monomers may be used individually, or two or more of these conjugated diene monomers may be used in combination. Of these conjugated diene monomers, 1,3-butadiene and isoprene are preferable, and isoprene is more preferable. In other words, the water-soluble polymer of the first embodiment preferably includes either or both of a 1,3-butadiene unit and an isoprene unit as the conjugated diene monomer unit, and more preferably includes an isoprene unit as the conjugated diene monomer unit.

The proportional content of the conjugated diene monomer unit in the water-soluble polymer of the first

embodiment when all repeating units included in the water-soluble polymer of the first embodiment are taken to be 100 mass% is preferably 5 mass% or more, more preferably 10 mass% or more, even more preferably 20 mass% or more, and further preferably 30 mass% or more, and is preferably 70 mass% or less, more preferably 60 mass% or less, and even more preferably 50 mass% or less.

Moreover, the proportional content of the conjugated diene monomer unit in the water-soluble polymer of the first embodiment when all repeating units included in the water-soluble polymer of the first embodiment are taken to be 100 mol% is preferably 10 mol% or more, more preferably 20 mol% or more, even more preferably 30 mol% or more, and further preferably 40 mol% or more, and is preferably 70 mol% or less, more preferably 60 mol% or less, and even more preferably 60 mol% or less.

When the proportional content of the conjugated diene monomer unit in the water-soluble polymer of the first embodiment is within any of the ranges set forth above, dispersibility and storage stability of the CNT dispersion liquid can be further improved, viscosity stability of a slurry for a negative electrode that contains the CNT dispersion liquid can be further improved, and cycle characteristics of a secondary battery that includes a negative electrode produced using the slurry for a negative electrode can be further improved.

[Other repeating units]

Examples of other repeating units that the water-soluble polymer of the first embodiment can include besides the carboxy group-containing monomer unit and the conjugated diene monomer unit described above include monomer units derived from known monomers (other monomers) that are copolymerizable with the carboxy group-containing monomer and the conjugated diene monomer described above without any specific limitations. One of these other monomers may be used individually, or two or more of these other monomers may be used in combination.

However, from a viewpoint of even further improving cycle characteristics of a secondary battery, the proportional content of other repeating units in the water-soluble polymer of the first embodiment when all repeating units included in the water-soluble polymer of the first embodiment are taken to be 100 mass% is preferably 20 mass% or less, more preferably 10 mass% or less, even more preferably 5 mass% or less, further preferably 1 mass% or less, and particularly preferably 0 mass%. Moreover, the proportional content of other repeating units in the water-soluble polymer of the first embodiment when all repeating units included in the water-soluble polymer of the first embodiment are taken to be 100 mol% is preferably 20 mol% or less, more preferably 10 mol% or less, even more preferably 5 mol% or less, further preferably 1 mol% or less, and particularly preferably 0 mol%.

In other words, the total proportional content of the carboxy group-containing monomer unit and the conjugated diene monomer unit in the water-soluble polymer of the first embodiment when all repeating units included in the water-soluble polymer of the first embodiment are taken to be 100 mass% is preferably 80 mass% or more, more preferably 90 mass% or more, even more preferably 95 mass% or more, further preferably 99 mass% or more, and particularly preferably 100 mass%. Moreover, the total proportional content of the carboxy group-containing monomer unit and the conjugated diene monomer unit in the water-soluble polymer of the first embodiment when all repeating units included in the water-soluble polymer of the first embodiment are taken to be 100 mol% is preferably 80 mol% or more, more preferably 90 mol% or more, even more preferably 95 mol% of more, further preferably 99 mol% or more, and particularly preferably 100 mol%.

{Water-soluble polymer of second embodiment}

A water-soluble polymer of the second embodiment includes a sulfo group-containing monomer unit and an alkylene oxide structure-containing monomer unit. Note that the water-soluble polymer of the second embodiment may include repeating units other than the sulfo group-containing monomer unit and the alkylene oxide structure-containing monomer unit (i.e., other repeating units).

[Sulfo group-containing monomer unit]

The sulfo group-containing monomer unit is a repeating unit that includes a sulfo group ($-SO_3H$). Note that in the CNT dispersion liquid, the sulfo group of the sulfo group-containing monomer unit is preferably partially or fully in the form of at least any one of a sodium sulfonate group ($-SO_3^-Na^+$), a lithium sulfonate group ($-SO_3^-Li^+$), and an ammonium sulfonate group ($-SO_3^-NH_4^+$). When the sulfo group is in the form of at least any one of the sulfonate salt groups set forth above, dispersibility and storage stability of the CNT dispersion liquid can be further improved, viscosity stability of a slurry for a negative electrode that contains the CNT dispersion liquid can be further improved, and cycle characteristics of a secondary battery that includes a negative electrode produced using the slurry for a negative electrode can be further improved.

Examples of sulfo group-containing monomers that can form the sulfo group-containing monomer unit of the

water-soluble polymer of the second embodiment include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, 3-allyloxy-2-hydroxypropane sulfonic acid, and salts of these monomers.

Note that in the present specification, "(meth)allyl" indicates "allyl" and/or "methallyl".

One sulfo group-containing monomer may be used individually, or two or more sulfo group-containing monomers may be used in combination. Styrene sulfonic acid is preferable as the sulfo group-containing monomer from a viewpoint of improving cycle characteristics of a secondary battery. In other words, the water-soluble polymer of the second embodiment preferably includes a styrene sulfonic acid unit as the sulfo group-containing monomer unit.

The proportional content of the sulfo group-containing monomer unit in the water-soluble polymer of the second embodiment when all repeating units included in the water-soluble polymer of the second embodiment are taken to be 100 mass% is preferably 40 mass% or more, more preferably 50 mass% or more, and even more preferably 55 mass% or more, and is preferably 95 mass% or less, more preferably 90 mass% or less, even more preferably 80 mass% or less, and further preferably 70 mass% or less.

Moreover, the proportional content of the sulfo group-containing monomer unit in the water-soluble polymer of the second embodiment when all repeating units included in the water-soluble polymer of the second embodiment are taken to be 100 mol% is preferably 40 mol% or more, more preferably 50 mol% or more, and even more preferably 55 mol% or more, and is preferably 95 mol% or less, more preferably 90 mol% or less, even more preferably 80 mol% or less, and further preferably 70 mol% or less.

When the proportional content of the sulfo group-containing monomer unit in the water-soluble polymer of the second embodiment is within any of the ranges set forth above, dispersibility and storage stability of the CNT dispersion liquid can be further improved, viscosity stability of a slurry for a negative electrode that contains the CNT dispersion liquid can be further improved, and cycle characteristics of a secondary battery that includes a negative electrode produced using the slurry for a negative electrode can be further improved.

[Alkylene oxide structure-containing monomer unit]

The alkylene oxide structure-containing monomer unit of the water-soluble polymer of the second embodiment is a monomer unit including a structure that can be represented by the following general formula (I).

[Chem. 1]

$$-\!\left(C_mH_{2m}O\right)_n\!- \quad \cdots (I)$$

[In formula (I), m is an integer of 1 or more and n is an integer of 1 or more.]

As a result of the water-soluble polymer of the second embodiment including the alkylene oxide structure-containing monomer unit, dispersibility and storage stability of the CNT dispersion liquid can be further improved, viscosity stability of a slurry for a negative electrode that contains the CNT dispersion liquid can be further improved, and cycle characteristics of a secondary battery that includes a negative electrode produced using the slurry for a negative electrode can be further improved. In formula (I), the integer m is preferably not less than 2 and not more than 5, more preferably 2 or 3, and even more preferably 2. In a case in which the integer m is 2, the monomer unit including a structural unit represented by general formula (I) is referred to as an ethylene oxide structure-containing monomer unit. Moreover, in a case in which the integer m is 3, the monomer unit including a structural unit represented by general formula (I) is referred to as a propylene oxide structure-containing monomer unit. When the integer m is not more than any of the upper limits set forth above, dispersibility and storage stability of the CNT dispersion liquid can be even further improved, viscosity stability of a slurry for a negative electrode that contains the CNT dispersion liquid can be even further improved, and cycle characteristics of a secondary battery that includes a negative electrode produced using the slurry for a negative electrode can be even further improved. Particularly in a case in which the integer m is 2 (i.e., a case in which the water-soluble polymer of the second embodiment includes an ethylene oxide structure-containing monomer unit), suitable hydrophilicity can be imparted to the water-soluble polymer of the second embodiment, and affinity of the water-soluble polymer of the second embodiment with respect to water can be increased. As a result, particularly in a case in which the water-soluble polymer of the second embodiment includes an ethylene oxide structure-containing monomer unit, dispersibility and storage stability of the CNT dispersion liquid can be particularly improved, viscosity stability of a slurry for a negative electrode that contains the CNT dispersion liquid can be particularly improved, and cycle characteristics of a secondary battery that includes a negative electrode produced using the slurry for a negative electrode can be particularly improved.

Note that the water-soluble polymer of the second embodiment may include a plurality of types of alkylene oxide

structure-containing monomer units. In other words, the water-soluble polymer of the second embodiment may, for example, include both an ethylene oxide structure-containing monomer unit and a propylene oxide structure-containing monomer unit.

The integer n that defines the number of repetitions of the monomer unit including a structure that can be represented by formula (I) is preferably 10 or less, more preferably 5 or less, and even more preferably 3 or less, and is preferably 2 or more. In other words, the alkylene oxide structure-containing monomer unit that is included in the water-soluble polymer of the second embodiment preferably includes a polyalkylene oxide structural unit including n repetitions of an alkylene oxide structural unit. Moreover, some or all of the hydrogen atoms of the alkylene oxide structural unit may be substituted with any substituent.

In a case in which the water-soluble polymer of the second embodiment includes a plurality of alkylene oxide structure-containing monomer units, the number of repetitions n may be the same or different for each of these alkylene oxide structure-containing monomer units. In this case, it is preferable that an average value of all numbers of repetitions n is within any of the preferred ranges set forth above, and more preferable that every number of repetitions n is within any of the preferred ranges set forth above.

Examples of alkylene oxide structure-containing monomers that can form the alkylene oxide structure-containing monomer unit of the water-soluble polymer of the second embodiment include a monomer represented by the following general formula (II).

[Chem. 2]

$$R^1{-}O{-}(C_mH_{2m}O)_n{-}R^2 \quad \cdots (II)$$

[In general formula (II), $R^1$ is a (meth)acryloyl group, and $R^2$ indicates a hydrogen atom or a linear or branched alkyl group having a carbon number of not less than 1 and not more than 10. The carbon number of the alkyl group is preferably not less than 2 and not more than 5, preferably 2 or 3, and more preferably 2. Note that m and n in general formula (II) are the same as m and n in general formula (I).]

Examples of the linear or branched alkyl group having a carbon number of not less than 1 and not more than 10 include a methyl group, an ethyl group, and a propyl group.

More specifically, examples of the monomer represented by general formula (II) include, but are not specifically limited to, methoxy polyethylene glycol (meth)acrylate, ethoxy polyethylene glycol (meth)acrylate such as ethoxy diethylene glycol (meth)acrylate, polypropylene glycol mono(meth)acrylate, and methoxy polypropylene glycol (meth) acrylate. Of these examples, ethoxy polyethylene glycol (meth)acrylate is preferable as the monomer represented by general formula (II), ethoxy diethylene glycol (meth)acrylate is more preferable as the monomer represented by general formula (II), and ethoxy diethylene glycol acrylate is particularly preferable as the monomer represented by general formula (II).

Note that in the present specification, "(meth)acrylate" indicates "acrylate" or "methacrylate" and "(meth) acryloyl" indicates "acryloyl" or "methacryloyl".

The proportional content of the alkylene oxide structure-containing monomer unit in the water-soluble polymer of the second embodiment when all repeating units included in the water-soluble polymer of the second embodiment are taken to be 100 mass% is preferably 5 mass% or more, more preferably 10 mass% or more, even more preferably 20 mass% or more, and further preferably 30 mass% or more, and is preferably 60 mass% or less, more preferably 50 mass% or less, and even more preferably 45 mass% or less.

Moreover, the proportional content of the alkylene oxide structure-containing monomer unit in the water-soluble polymer of the second embodiment when all repeating units included in the water-soluble polymer of the second embodiment are taken to be 100 mol% is preferably 5 mol% or more, more preferably 10 mol% or more, even more preferably 20 mol% or more, and further preferably 30 mol% or more, and is preferably 60 mol% or less, more preferably 50 mol% or less, and even more preferably 45 mol% or less.

When the proportional content of the alkylene oxide structure-containing monomer unit in the water-soluble polymer of the second embodiment is within any of the ranges set forth above, dispersibility and storage stability of the CNT dispersion liquid can be even further improved, viscosity stability of a slurry for a negative electrode that contains the CNT dispersion liquid can be even further improved, and cycle characteristics of a secondary battery that includes a negative electrode produced using the slurry for a negative electrode can be even further improved.

[Other repeating units]

Examples of other repeating units that the water-soluble polymer of the second embodiment can include besides

the sulfo group-containing monomer unit and the alkylene oxide structure-containing monomer unit described above include monomer units derived from known monomers (other monomers) that are copolymerizable with the sulfo group-containing monomer unit and the alkylene oxide structure-containing monomer unit described above without any specific limitations. One of these other monomers may be used individually, or two or more of these other monomers may be used in combination.

However, from a viewpoint of even further improving cycle characteristics of a secondary battery, the proportional content of other repeating units in the water-soluble polymer of the second embodiment when all repeating units included in the water-soluble polymer of the second embodiment are taken to be 100 mass% is preferably 20 mass% or less, more preferably 10 mass% or less, even more preferably 5 mass% or less, further preferably 1 mass% or less, and particularly preferably 0 mass%. Moreover, the proportional content of other repeating units in the water-soluble polymer of the second embodiment when all repeating units included in the water-soluble polymer of the second embodiment are taken to be 100 mol% is preferably 20 mol% or less, more preferably 10 mol% or less, even more preferably 5 mol% or less, further preferably 1 mol% or less, and particularly preferably 0 mol%.

In other words, the total proportional content of the sulfo group-containing monomer unit and the alkylene oxide structure-containing monomer unit in the water-soluble polymer of the second embodiment when all repeating units included in the water-soluble polymer of the second embodiment are taken to be 100 mass% is preferably 80 mass% or more, more preferably 90 mass% or more, even more preferably 95 mass% or more, further preferably 99 mass% or more, and particularly preferably 100 mass%. Moreover, the total proportional content of the sulfo group-containing monomer unit and the alkylene oxide structure-containing monomer unit in the water-soluble polymer of the second embodiment when all repeating units included in the water-soluble polymer of the second embodiment are taken to be 100 mol% is preferably 80 mol% or more, more preferably 90 mol% or more, even more preferably 95 mol% of more, further preferably 99 mol% or more, and particularly preferably 100 mol%.

{Water-soluble polymer of third embodiment}

A water-soluble polymer of the third embodiment includes a carboxy group-containing monomer unit and a (meth)acrylic acid alkyl ester monomer unit. Note that the water-soluble polymer of the third embodiment may include repeating units other than the carboxy group-containing monomer unit and the (meth)acrylic acid alkyl ester monomer unit (i.e., other repeating units).

In the present specification, "(meth)acryl" indicates "acryl" and/or "methacryl".

[Carboxy group-containing monomer unit]

Examples of carboxy group-containing monomers that can form the carboxy group-containing monomer unit of the water-soluble polymer of the third embodiment include the same monomers as carboxy group-containing monomers previously described in the "Water-soluble polymer of first embodiment" section.

One carboxy group-containing monomer may be used individually, or two or more carboxy group-containing monomers may be used in combination.

The proportional content of the carboxy group-containing monomer unit in the water-soluble polymer of the third embodiment when all repeating units included in the water-soluble polymer of the third embodiment are taken to be 100 mass% is preferably 10 mass% or more, more preferably 20 mass% or more, and even more preferably 25 mass% or more, and is preferably 50 mass% or less, more preferably 40 mass% or less, and even more preferably 35 mass% or less.

Moreover, the proportional content of the carboxy group-containing monomer unit in the water-soluble polymer of the third embodiment when all repeating units included in the water-soluble polymer of the third embodiment are taken to be 100 mol% is preferably 10 mol% or more, more preferably 20 mol% or more, and even more preferably 25 mol% or more, and is preferably 50 mol% or less, more preferably 40 mol% or less, and even more preferably 35 mol% or less.

When the proportional content of the carboxy group-containing monomer unit in the water-soluble polymer of the third embodiment is within any of the ranges set forth above, dispersibility and storage stability of the CNT dispersion liquid can be further improved, viscosity stability of a slurry for a negative electrode that contains the CNT dispersion liquid can be further improved, and cycle characteristics of a secondary battery that includes a negative electrode produced using the slurry for a negative electrode can be further improved.

[(Meth)acrylic acid alkyl ester monomer unit]

Examples of (meth)acrylic acid alkyl ester monomers that can form the (meth)acrylic acid alkyl ester monomer unit of the water-soluble polymer of the third embodiment include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and

stearyl acrylate; and methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. Note that one (meth)acrylic acid alkyl ester monomer may be used individually, or two or more (meth)acrylic acid alkyl ester monomers may be used in combination. Of these (meth)acrylic acid alkyl ester monomers, ethyl acrylate is preferable. In other words, the water-soluble polymer of the third embodiment preferably includes an ethyl acrylate unit as the (meth)acrylic acid alkyl ester monomer unit.

The proportional content of the (meth)acrylic acid alkyl ester monomer unit in the water-soluble polymer of the third embodiment when all repeating units included in the water-soluble polymer of the third embodiment are taken to be 100 mass% is preferably 50 mass% or more, more preferably 60 mass% or more, and even more preferably 65 mass% or more, and is preferably 90 mass% or less, more preferably 80 mass% or less, and even more preferably 75 mass% or less.

Moreover, the proportional content of the (meth)acrylic acid alkyl ester monomer unit in the water-soluble polymer of the third embodiment when all repeating units included in the water-soluble polymer of the third embodiment are taken to be 100 mol% is preferably 50 mol% or more, more preferably 60 mol% or more, and even more preferably 65 mol% or more, and is preferably 90 mol% or less, more preferably 80 mol% or less, and even more preferably 75 mol% or less.

When the proportional content of the (meth)acrylic acid alkyl ester monomer unit in the water-soluble polymer of the third embodiment is within any of the ranges set forth above, dispersibility and storage stability of the CNT dispersion liquid can be further improved, viscosity stability of a slurry for a negative electrode that contains the CNT dispersion liquid can be further improved, and cycle characteristics of a secondary battery that includes a negative electrode produced using the slurry for a negative electrode can be further improved.

[Other repeating units]

Examples of other repeating units that the water-soluble polymer of the third embodiment can include besides the carboxy group-containing monomer unit and the (meth)acrylic acid alkyl ester monomer unit described above include monomer units derived from known monomers (other monomers) that are copolymerizable with the carboxy group-containing monomer and the (meth)acrylic acid alkyl ester monomer described above without any specific limitations. One of these other monomers may be used individually, or two or more of these other monomers may be used in combination.

However, from a viewpoint of even further improving cycle characteristics of a secondary battery, the proportional content of other repeating units in the water-soluble polymer of the third embodiment when all repeating units included in the water-soluble polymer of the third embodiment are taken to be 100 mass% is preferably 20 mass% or less, more preferably 10 mass% or less, even more preferably 5 mass% or less, further preferably 1 mass% or less, and particularly preferably 0 mass%. Moreover, the proportional content of other repeating units in the water-soluble polymer of the third embodiment when all repeating units included in the water-soluble polymer of the third embodiment are taken to be 100 mol% is preferably 20 mol% or less, more preferably 10 mol% or less, even more preferably 5 mol% or less, further preferably 1 mol% or less, and particularly preferably 0 mol%.

In other words, the total proportional content of the carboxy group-containing monomer unit and the (meth)acrylic acid alkyl ester monomer unit in the water-soluble polymer of the third embodiment when all repeating units included in the water-soluble polymer of the third embodiment are taken to be 100 mass% is preferably 80 mass% or more, more preferably 90 mass% or more, even more preferably 95 mass% or more, further preferably 99 mass% or more, and particularly preferably 100 mass%. Moreover, the total proportional content of the carboxy group-containing monomer unit and the (meth)acrylic acid alkyl ester monomer unit in the water-soluble polymer of the third embodiment when all repeating units included in the water-soluble polymer of the third embodiment are taken to be 100 mol% is preferably 80 mol% or more, more preferably 90 mol% or more, even more preferably 95 mol% of more, further preferably 99 mol% or more, and particularly preferably 100 mol%.

{Production method}

No specific limitations are placed on the method by which the water-soluble polymer is produced. For example, the water-soluble polymer can be obtained by polymerizing a monomer composition containing one monomer or two or more monomers in an aqueous solvent. The obtained polymer may optionally be hydrogenated. Note that the proportional content of each monomer in the monomer composition can be set in accordance with the desired proportional content of each repeating unit (monomer unit) in the polymer.

The method of polymerization may be solution polymerization, suspension polymerization, bulk polymerization, emulsion polymerization, or the like without any specific limitations. Moreover, any of ionic polymerization, radical polymerization, living radical polymerization, various types of condensation polymerization, addition polymerization, and so forth can be adopted as the polymerization reaction. A known emulsifier and/or polymerization initiator can be used in the polymerization as necessary. Moreover, the hydrogenation can be performed by a known method.

Furthermore, neutralization may be performed using sodium hydroxide aqueous solution, lithium hydroxide aqueous solution, ammonia water, or the like, as necessary, after the polymerization so as to produce a water-soluble polymer that includes an acid functional group that is in a neutralized form such as previously described.

{Proportional content}

Although no specific limitations are placed on the proportional content of the water-soluble polymer in the CNT dispersion liquid, the proportional content of the water-soluble polymer when the mass of the entire CNT dispersion liquid is taken to be 100 mass% is preferably 0.1 mass% or more, and more preferably 0.2 mass% or more, and is preferably 5.0 mass% or less, more preferably 2.0 mass% or less, and even more preferably 0.8 mass% or less.

When the proportional content of the water-soluble polymer in the CNT dispersion liquid is not less than any of the lower limits set forth above, dispersibility of the CNT dispersion liquid can be improved. On the other hand, when the proportional content of the water-soluble polymer in the CNT dispersion liquid is not more than any of the upper limits set forth above, storage stability of the CNT dispersion liquid can be improved.

<Other components>

Examples of other components that the CNT dispersion liquid can contain besides the CNTs, the water-soluble polymer, and water include, but are not specifically limited to, conductive materials other than CNTs, dispersion mediums other than water, and components subsequently described in the "Slurry for non-aqueous secondary battery negative electrode" section with the exception of negative electrode active materials.

Examples of conductive materials other than CNTs that can be used include, but are not specifically limited to, carbon black (acetylene black, Ketjenblack® (Ketjenblack is a registered trademark in Japan, other countries, or both), furnace black, etc.), graphite, carbon flake, and carbon nanofiber.

Any known organic solvent that is miscible with water can be used as a dispersion medium other than water.

Note that one of these other components may be used individually, or two or more of these other components may be used in combination.

<Production method of CNT dispersion liquid>

No specific limitations are placed on the method by which the CNT dispersion liquid is produced. The CNT dispersion liquid can be produced by mixing the CNTs, the specific water-soluble polymer, water, and other components that are used as necessary. Note that this mixing can be performed using a known mixing device such as a disper blade, a Homo Mixer, a planetary mixer, a kneader, a ball mill, or a bead mill.

(Slurry for non-aqueous secondary battery negative electrode)

The presently disclosed slurry for a negative electrode contains the CNT dispersion liquid set forth above and a negative electrode active material and may contain optional components such as a binder as necessary. In other words, the presently disclosed slurry for a negative electrode contains CNTs, a water-soluble polymer, and water and may contain optional components such as a binder as necessary.

The slurry for a negative electrode that contains the CNT dispersion liquid set forth above in this manner has excellent viscosity stability and is capable of forming a negative electrode that can cause a secondary battery to display excellent cycle characteristics.

<Negative electrode active material>

Known negative electrode active materials can be used without any specific limitations as the negative electrode active material that is compounded in the slurry for a negative electrode.

Examples of negative electrode active materials that can be used in a lithium ion secondary battery, for example, include, but are not specifically limited to, carbon-based negative electrode active materials, metal-based negative electrode active materials, and negative electrode active materials that are a combination thereof.

A carbon-based negative electrode active material can be defined as an active material that contains carbon as its main framework and into which lithium can be inserted (also referred to as "doping"). Examples of the carbon-based negative electrode active material include carbonaceous materials and graphitic materials.

Examples of carbonaceous materials include graphitizing carbon and non-graphitizing carbon, typified by glassy carbon, which has a structure similar to an amorphous structure.

The graphitizing carbon may be a carbon material made using tar pitch obtained from petroleum or coal as a raw

material. Specific examples of graphitizing carbon include coke, mesocarbon microbeads (MCMB), mesophase pitch-based carbon fiber, and pyrolytic vapor-grown carbon fiber.

Examples of non-graphitizing carbon include pyrolyzed phenolic resin, polyacrylonitrile-based carbon fiber, quasi-isotropic carbon, pyrolyzed furfuryl alcohol resin (PFA), and hard carbon.

Examples of graphitic materials include natural graphite and artificial graphite.

Examples of artificial graphite include artificial graphite obtained through heat treatment of carbon containing graphitizing carbon at mainly 2800°C or higher, graphitized MCMB obtained through heat treatment of MCMB at 2000°C or higher, and graphitized mesophase pitch-based carbon fiber obtained through heat treatment of mesophase pitch-based carbon fiber at 2000°C or higher.

A metal-based negative electrode active material is an active material that contains metal, the structure of which usually contains an element that allows insertion of lithium, and that has a theoretical electric capacity per unit mass of 500 mAh/g or more when lithium is inserted. Examples of metal-based active materials include lithium metal, simple substances of metals that can form a lithium alloy (for example, Ag, Al, Ba, Bi, Cu, Ga, Ge, In, Ni, P, Pb, Sb, Si, Sn, Sr, Zn, and Ti) and alloys thereof, and oxides, sulfides, nitrides, silicides, carbides, and phosphides of any thereof. Of these examples, a silicon-based negative electrode active material (negative electrode active material containing silicon) is preferable as a metal-based negative electrode active material. One reason for this is that the capacity of a secondary battery can be increased through use of a silicon-based negative electrode active material. Note that although silicon-based negative electrode active materials display particularly large expansion and contraction in accompaniment to charging and discharging, the presently disclosed slurry for a negative electrode is, as a result of being produced using the presently disclosed CNT dispersion liquid set forth above, capable of forming a negative electrode in which reduction of electrical conductivity of an electrode mixed material layer is suppressed and that can cause a secondary battery to display even better cycle characteristics even in a situation in which a silicon-based negative electrode active material is used as the negative electrode active material.

Examples of silicon-based negative electrode active materials include silicon (Si), silicon-containing alloys, SiO, $SiO_x$, and composite materials of a Si-containing material and conductive carbon obtained by coating or combining the Si-containing material with the conductive carbon.

The proportion constituted by a silicon-based negative electrode active material among the negative electrode active material when the entire negative electrode active material is taken to be 100 mass% is preferably 1 mass% or more, and more preferably 3 mass% or less, and is preferably 20 mass% or less, and more preferably 15 mass% or less. The capacity of a secondary battery can be sufficiently increased when the proportion constituted by the silicon-based negative electrode active material is 1 mass% or more, whereas cycle characteristics of a secondary battery can even be further improved when the proportion constituted by the silicon-based negative electrode active material is 20 mass% or less.

The particle diameter of the negative electrode active material is not specifically limited and can be the same as that of a conventionally used negative electrode active material.

The amount of the negative electrode active material in the slurry for a negative electrode is also not specifically limited and can be set within a conventionally used range.

One negative electrode active material may be used individually, or two or more negative electrode active materials may be used in combination. However, from a viewpoint of sufficiently increasing the capacity of a secondary battery while also even further improving cycle characteristics of the secondary battery, it is preferable that the slurry for a negative electrode contains both a carbon-based negative electrode active material formed of a graphitic material and a silicon-based negative electrode active material.

<CNT dispersion liquid>

The CNT dispersion liquid can be the presently disclosed CNT dispersion liquid set forth above.

The content of the CNTs in the slurry for a negative electrode when the content of the negative electrode active material is taken to be 100 parts by mass is preferably 0.01 parts by mass or more, more preferably 0.05 parts by mass or more, and even more preferably 0.08 parts by mass or more, and is preferably 0.5 parts by mass or less, more preferably 0.3 parts by mass or less, and even more preferably 0.15 parts by mass or less.

Moreover, the content of the water-soluble polymer in the slurry for a negative electrode when the content of the negative electrode active material is taken to be 100 parts by mass is preferably 0.005 parts by mass or more, more preferably 0.01 parts by mass or more, and even more preferably 0.02 parts by mass or more, and is preferably 0.2 parts by mass or less, more preferably 0.1 parts by mass or less, and more preferably 0.05 parts by mass or less.

<Optional components>

Examples of optional components that can be contained in the slurry for a negative electrode include binders, viscosity modifiers, reinforcing materials, antioxidants, and additives for electrolyte solution having a function of inhibiting

electrolyte solution decomposition. One of these optional components may be used individually, or two or more of these optional components may be used in combination.

Of the optional components described above, the inclusion of a binder in the slurry for a negative electrode is preferable from a viewpoint of improving cycle characteristics of a secondary battery.

{Binder}

Any binder that can be used as a binder for a negative electrode can be used without any specific limitations as the binder.

Herein, it is preferable to use a particulate polymer including at least a carboxy group-containing monomer unit, an aromatic vinyl monomer unit, and a conjugated diene monomer unit as the binder because this can further improve cycle characteristics of a secondary battery that includes a negative electrode produced using the slurry for a negative electrode.

Note that the particulate polymer that can be used as the binder can be produced by a known method.

In the presently disclosed slurry for a negative electrode, an HSP distance ($R_c$) between the Hansen solubility parameters ($HSP_d$) of the water-soluble polymer and Hansen solubility parameters ($HSP_b$) of the particulate polymer is preferably 7.0 $MPa^{1/2}$ or less, and more preferably 5.0 $MPa^{1/2}$ or less.

When the HSP distance ($R_c$) is not more than any of the upper limits set forth above, cycle characteristics of a secondary battery that includes a negative electrode produced using the slurry for a negative electrode can be even further improved.

On the other hand, the HSP distance ($R_c$) may be 0.1 $MPa^{1/2}$ or more, or may be 1.0 $MPa^{1/2}$ or more, for example.

Note that the HSP distance ($R_c$) can be adjusted through appropriate alteration of $HSP_d$ (polarity term $\delta_{p2}$, dispersion term $\delta_{d2}$, and hydrogen bonding term $\delta_{h2}$) of the water-soluble polymer and $HSP_b$ (polarity term $\delta_{p4}$, dispersion term $\delta_{d4}$, and hydrogen bonding term $\delta_{h4}$) of the particulate polymer.

A smaller difference between the polarity term $\delta_{p4}$ of the particulate polymer and the polarity term $\delta_{p2}$ of the water-soluble polymer is more preferable. The polarity term $\delta_{p4}$ of the particulate polymer may be 5.0 or more, or may be 6.5 or more, for example, and may be 8.0 or less, or may be 7.5 or less, for example.

Moreover, a smaller difference between the dispersion term $\delta_{d4}$ of the particulate polymer and the dispersion term $\delta_{d2}$ of the water-soluble polymer is more preferable. The dispersion term $\delta_{d4}$ of the particulate polymer may be 17.0 or more, or may be 18.5 or more, for example, and may be 21.0 or less, or may be 19.5 or less, for example.

Furthermore, a smaller difference between the hydrogen bonding term $\delta_{h4}$ of the particulate polymer and the hydrogen bonding term $\delta_{h2}$ of the water-soluble polymer is more preferable. The hydrogen bonding term $\delta_{h4}$ of the particulate polymer may be 3.0 or more, or may be 4.0 or more, for example, and may be 6.0 or less, or may be 5.0 or less, for example.

[Carboxy group-containing monomer unit]

Examples of carboxy group-containing monomers that can form the carboxy group-containing monomer unit of the particulate polymer include the same monomers as carboxy group-containing monomers previously described in the "Water-soluble polymer of first embodiment" section.

One carboxy group-containing monomer may be used individually, or two or more carboxy group-containing monomers may be used in combination.

The proportional content of the carboxy group-containing monomer unit in the particulate polymer when all repeating units included in the particulate polymer are taken to be 100 mass% is preferably 3 mass% or more, and more preferably 5 mass% or more, and is preferably 30 mass% or less, and more preferably 20 mass% or less.

When the proportional content of the carboxy group-containing monomer unit in the particulate polymer is within any of the ranges set forth above, cycle characteristics of a secondary battery that includes a negative electrode produced using the slurry for a negative electrode can be even further improved.

[Aromatic vinyl monomer unit]

Examples of aromatic vinyl monomers that can form the aromatic vinyl monomer unit of the particulate polymer include styrene, styrene sulfonic acid and salts thereof, $\alpha$-methylstyrene, p-t-butylstyrene, butoxystyrene, vinyltoluene, chlorostyrene, and vinylnaphthalene. One aromatic vinyl monomer may be used individually, or two or more aromatic vinyl monomers may be used in combination. Moreover, styrene is preferable as the aromatic vinyl monomer because this can even further improve cycle characteristics of a secondary battery that includes a negative electrode produced using the slurry for a negative electrode. In other words, the particulate polymer preferably includes a styrene unit as the aromatic vinyl monomer unit.

The proportional content of the aromatic vinyl monomer unit in the particulate polymer when all repeating units included in the particulate polymer are taken to be 100 mass% is preferably 20 mass% or more, and more preferably 25 mass% or more, and is preferably 80 mass% or less, and more preferably 75 mass% or less. When the proportional content of the aromatic vinyl monomer unit in the particulate polymer is within any of the ranges set forth above, cycle characteristics of a secondary battery that includes a negative electrode produced using the slurry for a negative electrode can be even further improved.

[Conjugated diene monomer unit]

Examples of conjugated diene monomers that can form the conjugated diene monomer unit of the particulate polymer include the same monomers as conjugated diene monomers that were previously described in the "Water-soluble polymer" section.

One conjugated diene monomer may be used individually, or two or more conjugated diene monomers may be used in combination. Moreover, 1,3-butadiene is preferable as the conjugated diene monomer because this can even further improve cycle characteristics of a secondary battery that includes a negative electrode produced using the slurry for a negative electrode. In other words, the particulate polymer preferably includes a 1,3-butadiene unit as the conjugated diene monomer unit.

The proportional content of the conjugated diene monomer unit in the particulate polymer when all repeating units included in the particulate polymer are taken to be 100 mass% is preferably 15 mass% or more, and more preferably 20 mass% or more, and is preferably 50 mass% or less, and more preferably 45 mass% or less. When the proportional content of the conjugated diene monomer unit in the particulate polymer is within any of the ranges set forth above, cycle characteristics of a secondary battery that includes a negative electrode produced using the slurry for a negative electrode can be even further improved.

[Other repeating units]

Examples of other repeating units that the above-described particulate polymer can include besides the carboxy group-containing monomer unit, the aromatic vinyl monomer unit, and the conjugated diene monomer unit include monomer units derived from known monomers (other monomers) that are copolymerizable with the carboxy group-containing monomer, the aromatic vinyl monomer, and the conjugated diene monomer described above without any specific limitations. One of these other monomers may be used individually, or two or more of these other monomers may be used in combination.

The proportional content of other repeating units in the particulate polymer when all repeating units included in the particulate polymer are taken to be 100 mass% is preferably 10 mass% or less, more preferably 5 mass% or less, even more preferably 3 mass% or less, further preferably 1 mass% or less, and particularly preferably 0 mass%.

Note that the content of the particulate polymer in the slurry for a negative electrode is preferably 100 parts by mass or more, and more preferably 500 parts by mass or more per 100 parts by mass of the CNTs, and is preferably 5,000 parts by mass or less, and more preferably 2,000 parts by mass or less per 100 parts by mass of the CNTs. When the content of the particulate polymer is within any of the ranges set forth above, cycle characteristics of a secondary battery that includes a negative electrode produced using the slurry for a negative electrode can be even further improved.

<Characteristics of slurry for negative electrode>

The pH of the presently disclosed slurry for a negative electrode is preferably 6 or higher, and more preferably 7 or higher, and is preferably 10 or lower, and more preferably 9 or lower.

When the pH is within any of the ranges set forth above, viscosity stability of the slurry for a negative electrode can be improved, and cycle characteristics of a secondary battery that includes a negative electrode produced using the slurry for a negative electrode can be improved.

<Production method of slurry for negative electrode>

No specific limitations are placed on the mixing method when the above-described components are mixed to obtain the slurry for a negative electrode. A known mixing device such as previously described in the "Production method of CNT dispersion liquid" section can be used.

(Negative electrode for non-aqueous secondary battery)

The presently disclosed negative electrode includes a current collector and a negative electrode mixed material

layer formed on the current collector using the slurry for a negative electrode set forth above. The negative electrode mixed material layer contains a negative electrode active material, CNTs, and a water-soluble polymer and may optionally contain a binder and so forth. The presently disclosed negative electrode can cause a secondary battery to display excellent cycle characteristics as a result of including a negative electrode mixed material layer that has been formed using the presently disclosed slurry for a negative electrode set forth above.

<Current collector>

The current collector is formed of a material having electrical conductivity and electrochemical durability. Specifically, the current collector may, for example, be formed of iron, copper, aluminum, nickel, stainless steel, titanium, tantalum, gold, platinum, or the like. In particular, copper foil is preferable, and electrolytic copper foil is more preferable as a current collector used in a negative electrode of a lithium ion secondary battery because this can improve peel strength of the electrode mixed material layer from the current collector. Note that the materials for forming a current collector that are described above may be used individually or may be used as a combination of two or more types.

A polarity term $\delta_{p5}$ of the electrolytic copper foil used for the current collector is preferably 9.0 or more, and more preferably 10.0 or more, and is preferably 12.0 or less, and more preferably 11.0 or less. The polarity term $\delta_{p5}$ of the electrolytic copper foil is particularly preferably 10.7.

Moreover, a dispersion term $\delta_{d5}$ of the electrolytic copper foil used for the current collector is preferably 17.0 or more, and more preferably 18.0 or more, and is preferably 20.0 or less, and more preferably 19.0 or less. The dispersion term $\delta_{d5}$ of the electrolytic copper foil is particularly preferably 18.6.

Furthermore, a hydrogen bonding term $\delta_{h5}$ of the electrolytic copper foil used for the current collector is preferably 5.0 or more, and more preferably 6.0 or more, and is preferably 9.0 or less, and more preferably 8.0 or less. The hydrogen bonding term $\delta_{h5}$ of the electrolytic copper foil is particularly preferably 7.0.

<Production method of negative electrode>

No specific limitations are placed on the method by which the presently disclosed negative electrode is produced. For example, the presently disclosed negative electrode can be produced by applying the presently disclosed slurry for a negative electrode set forth above onto at least one side of the current collector and then drying the slurry for a negative electrode to form a negative electrode mixed material layer. More specifically, this production method includes a step of applying the slurry for a negative electrode onto at least one side of the current collector (application step) and a step of drying the slurry for a negative electrode that has been applied onto at least one side of the current collector to form a negative electrode mixed material layer on the current collector (drying step).

{Application step}

The slurry for a negative electrode can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry for a negative electrode may be applied onto just one side of the current collector or may be applied onto both sides of the current collector. The thickness of the slurry coating on the current collector after application but before drying can be set as appropriate in accordance with the thickness of the negative electrode mixed material layer to be obtained after drying.

{Drying step}

The slurry for a negative electrode on the current collector can be dried by any commonly known method without any specific limitations. Examples of drying methods that can be used include drying by warm, hot, or low-humidity air; drying in a vacuum; and drying by irradiation with infrared light, electron beams, or the like. By drying the slurry for a negative electrode on the current collector in this manner, it is possible to form a negative electrode mixed material layer on the current collector and thereby obtain a negative electrode including the current collector and the negative electrode mixed material layer.

After the drying step, the negative electrode mixed material layer may be further subjected to a pressing process by mold pressing, roll pressing, or the like. This pressing process can cause good close adherence of the negative electrode mixed material layer to the current collector.

Moreover, in a case in which the negative electrode mixed material layer contains a curable polymer, this polymer may be cured after formation of the negative electrode mixed material layer.

(Non-aqueous secondary battery)

The presently disclosed secondary battery includes the presently disclosed negative electrode set forth above. Moreover, the presently disclosed secondary battery has excellent cycle characteristics as a result of including the presently disclosed negative electrode. Note that the presently disclosed secondary battery is preferably a lithium ion secondary battery, for example.

The following describes the configuration of a lithium ion secondary battery as one example of the presently disclosed secondary battery. This lithium ion secondary battery includes a positive electrode, a negative electrode, an electrolyte solution, and a separator. The negative electrode is the presently disclosed negative electrode for a non-aqueous secondary battery set forth above.

<Positive electrode>

Any known positive electrode can be used as the positive electrode without any specific limitations.

<Electrolyte solution>

The electrolyte solution is normally an organic electrolyte solution obtained by dissolving a supporting electrolyte in an organic solvent. The supporting electrolyte may, for example, be a lithium salt. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

The concentration of the electrolyte in the electrolyte solution can be adjusted as appropriate and is, for example, preferably 0.5 mass% to 15 mass%, more preferably 2 mass% to 13 mass%, and even more preferably 5 mass% to 10 mass%. Moreover, a known additive such as fluoroethylene carbonate or ethyl methyl sulfone may be added to the electrolyte solution.

<Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred since such a membrane can reduce the total thickness of the separator, which increases the ratio of electrode active material in the lithium ion secondary battery, and consequently increases the volumetric capacity.

<Production method of lithium ion secondary battery>

The lithium ion secondary battery in accordance with the present disclosure can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may, for example, be a coin type, a button type, a sheet type, a cylinder type, a prismatic type, or a flat type.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to evaluate the Hansen solubility parameters (HSP) of CNTs, a water-soluble polymer, electrolytic copper foil, and a particulate polymer, HSP distances, dispersibility of a CNT dispersion liquid, storage stability of a CNT dispersion liquid, viscosity stability of a slurry for a negative electrode, and cycle characteristics of a secondary battery.

<Hansen solubility parameters (HSP)>

{$HSP_c$ of CNTs}

For each of 12 types of solvents (acetone, toluene, ethanol, tetrahydrofuran, dimethylformamide, methyl ethyl ketone, benzyl alcohol, γ-butyrolactone, nitrobenzene, N-methyl-2-pyrrolidone, salicylaldehyde, and methyl acetate), 0.1 g of CNTs was added to 10 mL of the solvent and was ultrasonically dispersed under conditions of 10 minutes at 20 kHz and 200 W to obtain a measurement liquid. Pulse NMR measurement was performed for each of the 12 types of solvents (pure solvents) and for each of the measurement liquids. $R_{sp}$ was calculated from the obtained results by the following formula as a function of the relaxation time T1 of the pure solvent and the relaxation time T2 of the solvent in the measurement liquid.

$$R_{sp} = (T1/T2) - 1$$

Scoring of the affinity of each solvent and the CNTs was performed from the obtained value for $R_{sp}$ as indicated below.

- $R_{sp} \leq 0.2$ (poor solvent): 0
- $0.2 < R_{sp} \leq 0.5$ (poor solvent): 2
- $0.5 < R_{sp}$ (good solvent): 1

The polarity term $\delta_{p1}$, dispersion term $\delta_{d1}$, and hydrogen bonding term $\delta_{h1}$ of $HSP_c$ were then determined in accordance with the obtained score using computer software "Hansen Solubility Parameters in Practice (HSPiP ver. 5.3.04)".

{$HSP_d$ of water-soluble polymer}

In the case of a water-soluble polymer that was a homopolymer, $HSP_d$ of the water-soluble polymer was determined by the Y-MB method of HSPiP ver. 5.3.04.

In the case of a water-soluble polymer that was a copolymer, $HSP_d$ of the water-soluble polymer was determined by determining HSP for a homopolymer of each monomer unit forming the copolymer by the Y-MB method of HSPiP ver. 5.3.04 and then performing internal division of the polarity term $\delta_p$, dispersion term $\delta_d$, and hydrogen bonding term $\delta_h$ determined for each homopolymer and the molar ratio of each monomer unit in the copolymer. For example, in a case in which the water-soluble polymer is a copolymer of a monomer unit A and a monomer unit B, in which proportional content of the monomer unit A is 60 mol% and proportional content of the monomer unit B is 40 mol%, and in which a homopolymer of the monomer unit A has a polarity term $\delta_p$ of $A_p$, a dispersion term $\delta_d$ of $A_d$, and a hydrogen bonding term $\delta_h$ of $A_h$ and a homopolymer of the monomer unit B has a polarity term $\delta_p$ of $B_p$, a dispersion term $\delta_d$ of $B_d$, and a hydrogen bonding term $\delta_h$ of $B_h$, $HSP_d$ of the water-soluble polymer can be determined by "polarity term $\delta_{p2} = 0.4 \times A_p + 0.6 \times B_p$", "dispersion term $\delta_{d2} = 0.4 \times A_d + 0.6 \times B_d$", and "hydrogen bonding term $\delta_{h2} = 0.4 \times A_h + 0.6 \times B_h$".

Note that although $HSP_d$ of a water-soluble polymer was determined by the method described above in the present examples, $HSP_d$ of a water-soluble polymer for which the detailed configuration thereof is unknown can be determined by the following method, for example.

First, for each of 12 types of solvents (acetone, toluene, ethanol, tetrahydrofuran, dimethylformamide, methyl ethyl ketone, benzyl alcohol, γ-butyrolactone, nitrobenzene, N-methyl-2-pyrrolidone, salicylaldehyde, and methyl acetate), 0.5 g of the water-soluble polymer that has been dried at 25°C for 7 days and then vacuum dried at 60°C for 10 hours is added to 10 mL of the solvent and is left at rest at 25°C for 24 hours to obtain an evaluation liquid. Scoring of this evaluation liquid is performed as follows through visual inspection.

- Not dissolved (poor solvent): 0
- State having turbidity and/or fluctuation (poor solvent): 2
- Completely dissolved (good solvent): 1

The polarity term $\delta_{p2}$, dispersion term $\delta_{d2}$, and hydrogen bonding term $\delta_{h2}$ of $HSP_d$ are then determined in accordance with the obtained score using HSPiP described above.

{$HSP_m$ of electrolytic copper foil}

$HSP_m$ of the surface of electrolytic copper foil was determined as follows.

First, for each of 12 types of solvents (aniline, benzyl benzoate, dimethyl sulfoxide, $\gamma$-butyrolactone, benzyl alcohol, N-methyl-2-pyrrolidone, methyl ethyl ketone, salicylaldehyde, ethyl acetate, ethanol, 1,1,2,2-tetrabromoethane, and formamide), a droplet of 2.0 $\mu$L of the solvent was dripped onto the surface of the electrolytic copper foil. The contact angle at 30 seconds after dripping was recorded, $\gamma_{sL}$ was calculated from the value of the contact angle by the Young-Dupre equation and the Hata-Kitazaki extended Fowkes equation, and then $HSP_m$ was determined from a relationship (equation 1) between Hansen solubility parameters and surface tension (Hansen Solubility Parameters 50th anniversary conference, preprint 2017 PP. 14-21 (2017)) such that "HSP distance between HSP of each solvent and HSP of electrolytic copper foil" and "$(\gamma_{sL}/(V_L^{1/3}))^{1/2}$" were correlated. $\delta_{d3}^2 + \delta_{p3}^2 + 0.068\delta_{h3}^2 = 13.9_{\gamma sL}(1/(V_L^{1/3}))$ (Equation 1)

Upon determination of $HSP_m$ of electrolytic copper foil (produced by Furukawa Electric Co., Ltd.; product name: HC-WS) that was used in the examples and comparative examples by the method described above, the polarity term $\delta_{p3}$ was 10.7, the dispersion term $\delta_{d3}$ was 18.6, and the hydrogen bonding term $\delta_{h3}$ was 7.0.

Note that the contact angle was measured using an Economical Contact Angle Meter Dme-211.

{$HSP_b$ of particulate polymer (binder)}

For each of 12 types of solvents (acetone, toluene, ethanol, tetrahydrofuran, dimethylformamide, methyl ethyl ketone, benzyl alcohol, $\gamma$-butyrolactone, nitrobenzene, N-methyl-2-pyrrolidone, salicylaldehyde, and methyl acetate), 0.5 g of a particulate polymer that had been dried at 25°C for 7 days and then vacuum dried at 60°C for 10 hours was added to 10 mL of the solvent and was left at rest at 25°C for 24 hours to obtain an evaluation liquid. Scoring of this evaluation liquid was performed as follows through visual inspection.

- Not dissolved (poor solvent): 0
- State having turbidity and/or fluctuation (poor solvent): 2
- Completely dissolved (good solvent): 1

The polarity term $\delta_{p4}$, dispersion term $\delta_{d4}$, and hydrogen bonding term $\delta_{h4}$ of $HSP_b$ were then determined in accordance with the obtained score using HSPiP described above.

<HSP distances>

{HSP distance ($R_a$)}

$HSP_c$ of CNTs and $HSP_d$ of a water-soluble polymer were used to calculate an HSP distance ($R_a$) by the following formula (1).

$$\text{HSP distance } (R_a) = \{(\delta_{p1} - \delta_{p2})^2 + 4 \times (\delta_{d1} - \delta_{d2})^2 + (\delta_{h1} - \delta_{h2})^2\}^{1/2} \cdots (1)$$

{HSP distance ($R_b$)}

$HSP_d$ of a water-soluble polymer and $HSP_m$ of electrolytic copper foil (polarity term $\delta_{p3}$ = 10.7; dispersion term $\delta_{d3}$ = 18.6; hydrogen bonding term $\delta_{h3}$ = 7.0) were used to calculate an HSP distance ($R_b$) by the following formula (2).

$$\text{HSP distance } (R_b) = \{(\delta_{p2} - 10.7)^2 + 4 \times (\delta_{d2} - 18.6)^2 + (\delta_{h2} - 7.0)^2\}^{1/2} \cdots (2)$$

{HSP distance ($R_c$)}

$HSP_d$ of a water-soluble polymer and $HSP_b$ of a particulate polymer were used to calculate an HSP distance ($R_c$) by the following formula (3).

$$\text{HSP distance } (R_c) = \{(\delta_{p2} - \delta_{p4})^2 + 4 \times (\delta_{d2} - \delta_{d4})^2 + (\delta_{h2} - \delta_{h4})^2\}^{1/2} \cdots (3)$$

<Dispersibility of CNT dispersion liquid>

Wet measurement of volume-average particle diameter D50 was performed for a CNT dispersion liquid in accordance with JIS Z8825:2013 using a laser diffraction/scattering particle size analyzer (Microtrac MT-3300EXII produced by MicrotracBEL Corp.). A smaller value for the volume-average particle diameter D50 indicates better dispersibility.

S: Volume-average particle diameter D50 of less than 5 μm
A: Volume-average particle diameter D50 of not less than 5 μm and less than 15 μm
B: Volume-average particle diameter D50 of not less than 15 μm and less than 50 μm
C: Volume-average particle diameter D50 of 50 μm or more

<Storage stability of CNT dispersion liquid>

The viscosity η1 of a CNT dispersion liquid straight after production was measured under conditions of a temperature of 25°C and a spindle rotation speed of 60 rpm using a B-type viscometer at a point 60 seconds after the start of rotation of the spindle. The CNT dispersion liquid for which η1 had been measured was stored under conditions of 10 days at rest at 25°C, and the viscosity η2 after storage was measured in the same way as the viscosity η1. A ratio of η2 relative to η1 (η2/η1) was taken as a dispersion liquid viscosity ratio and was evaluated by the following standard. A value of closer to 1.0 for the dispersion liquid viscosity ratio indicates that viscosity increase of the CNT dispersion liquid is suppressed and that the CNT dispersion liquid has better storage stability.

A: Dispersion liquid viscosity ratio of less than 1.15
B: Dispersion liquid viscosity ratio of not less than 1.15 and less than 1.6
C: Dispersion liquid viscosity ratio of 1.6 or more

<Viscosity stability of slurry for negative electrode>

The viscosity η3 of a slurry for a negative electrode straight after production was measured under conditions of a temperature of 25°C and a spindle rotation speed of 60 rpm using a B-type viscometer at a point 60 seconds after the start of rotation of the spindle. The slurry for a negative electrode for which η3 had been measured was stored under conditions of 3 days at rest at 25°C, and the viscosity η4 after storage was measured in the same way as the viscosity η3. A ratio of η4 relative to η3 (η4/η3) was taken as a slurry viscosity ratio and was evaluated by the following standard. A value of closer to 1.0 for the slurry viscosity ratio indicates that viscosity increase of the slurry for a negative electrode is suppressed and that the slurry for a negative electrode has better viscosity stability.

A: Slurry viscosity ratio of less than 1.2
B: Slurry viscosity ratio of not less than 1.2 and less than 1.4
C: Slurry viscosity ratio of not less than 1.4 and less than 1.6
D: Slurry viscosity ratio of 1.6 or more

<Cycle characteristics of secondary battery>

A secondary battery was left at rest in a 25°C environment for 24 hours after injection of electrolyte solution. Next, the secondary battery was subjected to a charge/discharge operation of charging to a cell voltage of 4.35 V by 0.2C constant current-constant voltage charging (cut off: 0.02C) and constant current discharging to a cell voltage of 2.75 V, and the initial capacity C0 was measured. The secondary battery was further subjected to repeated charging and discharging of charging to a cell voltage of 4.35 V by 1.0C constant current-constant voltage charging (cut off: 0.02C) and discharging to a cell voltage of 2.75 V by a constant-current method in a 25°C environment, and the capacity C1 after 100 cycles was measured. A capacity maintenance rate (%) was calculated (= C1/C0 × 100) and was evaluated by the following standard. A higher capacity maintenance rate indicates that the secondary battery has better cycle characteristics.

A: Capacity maintenance rate of 90% or more
B: Capacity maintenance rate of not less than 85% and less than 90%
C: Capacity maintenance rate of not less than 80% and less than 85%
D: Capacity maintenance rate of less than 80%

(Example 1)

<Production of water-soluble polymer (dispersant)>

A reactor was charged with 473 parts of deionized water, 58 parts of methacrylic acid (carboxy group-containing monomer), 0.6 parts of t-dodecyl mercaptan, and 3.0 parts of sodium dodecylbenzenesulfonate diluted to a solid content concentration of 10% with deionized water. Next, the inside of the reactor was tightly sealed and was stirred by an impeller while performing nitrogen purging twice. Once the nitrogen purging was complete, 42 parts of isoprene (conjugated diene monomer) that had also been subjected to nitrogen purging was loaded into the reactor. Thereafter, the inside of the reactor was controlled to 5°C. Once control of the inside of the reactor to 5°C was confirmed, 0.01 parts of hydrosulfite was dissolved in deionized water and was then added into the reactor. Once 5 minutes had passed after addition of the hydrosulfite, 0.1 parts of cumene hydroperoxide (first addition) was added. A separate vessel was used to prepare a solution having 0.04 parts of sodium formaldehyde sulfoxylate (produced by Mitsubishi Gas Chemical Company, Ltd.; product name: SFS) (first addition), 0.003 parts of ferrous sulfate (produced by Chubu Chelest Co., Ltd.; product name: FROST Fe) (first addition), and 0.03 parts of ethylenediaminetetraacetic acid (produced by Chubu Chelest Co., Ltd.; product name: CHELEST 400G) dissolved in 9.0 parts of deionized water, and this solution was added into the reactor.

Once the polymerization conversion rate reached 40%, the inside of the reactor was heated to 10°C. Thereafter, once the polymerization conversion rate reached 60%, the inside of the reactor was heated to 18°C. Thereafter, once the polymerization conversion rate reached 70%, 0.09 parts of cumene hydroperoxide (second addition) was added into the reactor. A separate vessel was used to prepare a solution having 0.04 parts of sodium formaldehyde sulfoxylate (produced by Mitsubishi Gas Chemical Company, Ltd.; product name: SFS) (second addition), 0.003 parts of ferrous sulfate (produced by Chubu Chelest Co., Ltd.; product name: FROST Fe) (second addition), and 0.03 parts of ethylenediaminetetraacetic acid (produced by Chubu Chelest Co., Ltd.; product name: CHELEST 400G) dissolved in 9.0 parts of deionized water, and this solution was added into the reactor.

Once the polymerization conversion rate reached 93%, 0.12 parts of 2,2,6,6-tetramethylpiperidine 1-oxyl diluted with 10.35 parts of deionized water was added into the reactor to stop the reaction. After stopping of the reaction, deodorization was performed by an evaporator until residual isoprene was 300 ppm or less. Upon completion of the deodorization, the pH was adjusted to 8 under stirring using 5% lithium hydroxide aqueous solution to yield an aqueous solution of a water-soluble polymer (dispersant).

$HSP_d$ (polarity term $\delta_{p2}$, dispersion term $\delta_{d2}$, hydrogen bonding term $\delta_{h2}$) of the obtained water-soluble polymer was determined.

<Production of CNT dispersion liquid>

A disper blade was used to stir (3,000 rpm, 60 minutes) 1 part of multi-walled CNTs (average diameter: 10 nm; G/D ratio: 0.8; polarity term $\delta_{p1}$ = 7.0; dispersion term $\delta_{d1}$ = 18.5; hydrogen bonding term $\delta_{h1}$ = 4.8), 0.3 parts (in terms of solid content) of the water-soluble polymer produced as described above as a dispersant, and an appropriate amount of deionized water, and then a bead mill in which zirconia beads of 1 mm in diameter were used was used to perform 30 minutes of mixing at a circumferential speed of 8 m/s. The pH was then adjusted to 8 using 5% lithium hydroxide aqueous solution to produce a CNT dispersion liquid (solid content concentration of CNTs = 1%; solid content concentration of water-soluble polymer = 0.3%).

The HSP distance ($R_a$) and the HSP distance ($R_b$) were calculated for the obtained CNT dispersion liquid. The

results are shown in Table 1.

Moreover, dispersibility and storage stability were evaluated for the obtained CNT dispersion liquid. The results are shown in Table 1.

<Production of particulate polymer (binder)>

A 5 MPa pressure-resistant vessel A equipped with a stirrer was charged with 3.15 parts of styrene, 1.66 parts of 1,3-butadiene, 0.2 parts of sodium lauryl sulfate as an emulsifier, 20 parts of deionized water, and 0.03 parts of potassium persulfate as a polymerization initiator. These materials were thoroughly stirred, were subsequently heated to 60°C to initiate polymerization, and were reacted for 6 hours to yield seed particles.

After the above-described reaction, heating was performed to 75°C, addition of a mixture of 53.85 parts of styrene, 31.34 parts of 1,3-butadiene, 10.0 parts of acrylic acid, 0.25 parts of tert-dodecyl mercaptan as a chain transfer agent, and 0.35 parts of sodium lauryl sulfate as an emulsifier from a separate vessel B was initiated with respect to the pressure-resistant vessel A, and, simultaneously thereto, addition of 1 part of potassium persulfate as a polymerization initiator was initiated with respect to the pressure-resistant vessel A so as to initiate a second stage of polymerization.

In other words, the overall monomer composition was 57 parts of styrene, 33 parts of 1,3-butadiene, and 10 parts of acrylic acid.

Addition of the total amount of the mixture containing the monomer composition was completed at 5.5 hours after the start of the second stage of polymerization. Thereafter, the temperature was further raised to 85°C and a reaction was performed for 6 hours. Cooling was performed to quench the reaction at the point at which the polymerization conversion rate reached 97%. This mixture containing a polymerized product was adjusted to pH 8 through addition of 5% sodium hydroxide aqueous solution. Unreacted monomer was subsequently removed through thermal-vacuum distillation. Thereafter, cooling was performed to yield a water dispersion of a particulate polymer that was water-insoluble.

Upon determination of $HSP_b$ for the obtained particulate polymer, the polarity term $\delta_{p4}$ was 6.8, the dispersion term $\delta_{d4}$ was 19.0, and the hydrogen bonding term $\delta_{h4}$ was 4.6.

<Production of slurry for negative electrode>

A planetary mixer equipped with a disper blade was charged with 90 parts of artificial graphite (volume-average particle diameter: 24.5 μm; specific surface area: 3.5 $m^2/g$) as a carbon-based negative electrode active material, 10 parts of $SiO_x$ as a silicon-based negative electrode active material, and 2.0 parts (in terms of solid content) of an aqueous solution of carboxymethyl cellulose as a viscosity modifier. These materials were adjusted to a solid content concentration of 58% with deionized water and were mixed at room temperature for 60 minutes. After mixing, the CNT dispersion liquid obtained as described above was added into the planetary mixer such that the amount of the multi-walled CNTs was 0.1 parts (in terms of solid content) and was mixed. Next, the solid content concentration was adjusted to 50% with deionized water, and 1.0 parts (in terms of solid content) of the water dispersion of the particulate polymer (binder) obtained as described above was further added to yield a mixture. The obtained mixture was subjected to defoaming under reduced pressure to yield a slurry for a negative electrode having good fluidity.

The HSP distance ($R_c$) was calculated for the obtained slurry for a negative electrode. The result is shown in Table 1.

Moreover, viscosity stability was evaluated for the obtained slurry for a negative electrode. The result is shown in Table 1.

<Production of negative electrode>

The slurry for a negative electrode obtained as described above was applied onto electrolytic copper foil (produced by Furukawa Electric Co., Ltd. ; product name: HC-WS; polarity term $\delta_{p3}$ = 10.7; dispersion term $\delta_{d3}$ = 18.6; hydrogen bonding term $\delta_{h3}$ = 7.0) of 16 μm in thickness serving as a current collector by a comma coater such as to have a thickness of 105 μm and a coating weight of 10 $mg/cm^2$ after drying. The electrolytic copper foil with the slurry for a negative electrode applied thereon was conveyed inside an oven having a temperature of 100°C for 2 minutes and an oven having a temperature of 120°C for 2 minutes at a speed of 0.5 m/min to dry the slurry for a negative electrode on the electrolytic copper foil and obtain a negative electrode web. This negative electrode web was rolled by roll pressing to obtain a negative electrode having a negative electrode mixed material layer thickness of 80 μm.

<Production of positive electrode>

A planetary mixer was charged with 95 parts of $LiCoO_2$ having a spinel structure as a positive electrode active material, 3 parts in terms of solid content of PVDF (polyvinylidene fluoride) as a binder, 2 parts of acetylene black as a

conductive material, and 20 parts of N-methylpyrrolidone as a solvent, and these materials were mixed to yield a slurry for a positive electrode.

The obtained slurry for a positive electrode was applied onto aluminum foil (current collector) of 20 μm in thickness by a comma coater such as to have a thickness after drying of approximately 100 μm. The aluminum foil with the slurry for a positive electrode applied thereon was conveyed inside an oven having a temperature of 60°C for 2 minutes and an oven having a temperature of 120°C for 2 minutes at a speed of 0.5 m/min to dry the slurry for a positive electrode on the aluminum foil and obtain a positive electrode web. This positive electrode web was rolled by roll pressing to obtain a positive electrode having a positive electrode mixed material layer thickness of 70 μm.

<Preparation of separator>

A separator made of a single layer of polypropylene (produced by dry method; width 65 mm, length 500 mm, thickness 25 μm, porosity 55%) was prepared. This separator was cut out as a 5 cm × 5 cm square for use in secondary battery production.

<Production of secondary battery>

An aluminum packing case was prepared as a battery case. The positive electrode was cut out as a 4 cm × 4 cm square and was arranged with the surface at the current collector-side in contact with the aluminum packing case. Next, the square separator described above was arranged on the surface of the positive electrode mixed material layer of the positive electrode. In addition, the negative electrode was cut out as a 4.2 cm × 4.2 cm square and was arranged on the separator such that the surface at the negative electrode mixed material layer-side faced toward the separator. Thereafter, a $LiPF_6$ solution of 1.0 M in concentration (solvent: mixed solvent of ethylene carbonate/diethyl carbonate = 1/2 (volume ratio); additives: 2 volume% (solvent ratio) of each of fluoroethylene carbonate and vinylene carbonate) was loaded as an electrolyte solution. The aluminum packing case was then closed by heat sealing at 150°C to tightly seal an opening of the aluminum packing and thereby produce a laminate cell-type lithium ion secondary battery.

The obtained lithium ion secondary battery was used to evaluate cycle characteristics. The result is shown in Table 1.

(Example 2)

Various operations, measurements, and evaluations were performed in the same way as in Example 1 with the exception that the amount of the water-soluble polymer used in production of the CNT dispersion liquid was changed such that the solid content concentration of the water-soluble polymer in the CNT dispersion liquid was 1%. The results are shown in Table 1.

(Example 3)

Various operations, measurements, and evaluations were performed in the same way as in Example 1 with the exception that single-walled CNTs (average diameter: 3 nm; G/D ratio: 5; polarity term $\delta_{p1}$ = 6.0; dispersion term $\delta_{d1}$ = 19.4; hydrogen bonding term $\delta_{h1}$ = 4.5) were used instead of multi-walled CNTs in production of the CNT dispersion liquid. The results are shown in Table 1.

(Example 4)

Various operations, measurements, and evaluations were performed in the same way as in Example 1 with the exception that 59 parts of sodium styrene sulfonate (sulfo group-containing monomer) and 41 parts of ethoxy diethylene glycol acrylate (alkylene oxide structure-containing monomer) were used instead of isoprene and methacrylic acid in production of the water-soluble polymer and that the pH of the CNT dispersion liquid was adjusted to 7.7 in production of the CNT dispersion liquid. The results are shown in Table 1.

(Example 5)

Various operations, measurements, and evaluations were performed in the same way as in Example 4 with the exception that single-walled CNTs (average diameter: 3 nm; G/D ratio: 5) were used instead of multi-walled CNTs in production of the CNT dispersion liquid. The results are shown in Table 1.

(Example 6)

Various operations, measurements, and evaluations were performed in the same way as in Example 4 with the exception that the pH of the CNT dispersion liquid was adjusted to 4.0 in production of the CNT dispersion liquid. The results are shown in Table 1.

(Example 7)

Various operations, measurements, and evaluations were performed in the same way as in Example 4 with the exception that the pH of the CNT dispersion liquid was adjusted to 12.0 in production of the CNT dispersion liquid. The results are shown in Table 1.

(Example 8)

Various operations, measurements, and evaluations were performed in the same way as in Example 7 with the exception that the amount of sodium styrenesulfonate was changed to 77 parts and the amount of ethoxy diethylene glycol acrylate was changed to 23 parts in production of the water-soluble polymer. The results are shown in Table 1.

(Example 9)

Various operations, measurements, and evaluations were performed in the same way as in Example 1 with the exception that 5% sodium hydroxide aqueous solution was used instead of 5% lithium hydroxide aqueous solution in production of the water-soluble polymer and production of the CNT dispersion liquid. The results are shown in Table 1.

(Example 10)

Various operations, measurements, and evaluations were performed in the same way as in Example 3 with the exception that the amounts of the CNTs and the water-soluble polymer used in production of the CNT dispersion liquid were changed such that the solid content concentration of the CNTs was 0.4% and the solid content concentration of the water-soluble polymer was 1% in the CNT dispersion liquid. The results are shown in Table 1.

(Example 11)

Various operations, measurements, and evaluations were performed in the same way as in Example 9 with the exception that 70 parts of ethyl acrylate ((meth)acrylic acid alkyl ester monomer) and 30 parts of methacrylic acid were used instead of 42 parts of isoprene and 58 parts of methacrylic acid in production of the water-soluble polymer. The results are shown in Table 1.

(Example 12)

Various operations, measurements, and evaluations were performed in the same way as in Example 10 with the exception that 70 parts of ethyl acrylate ((meth)acrylic acid alkyl ester monomer) and 30 parts of methacrylic acid were used instead of 42 parts of isoprene and 58 parts of methacrylic acid in production of the CNT dispersion liquid and that 5% sodium hydroxide aqueous solution was used instead of 5% lithium hydroxide aqueous solution in production of the water-soluble polymer and production of the CNT dispersion liquid. The results are shown in Table 1.

(Comparative Example 1)

Various operations, measurements, and evaluations were performed in the same way as in Example 8 with the exception that only sodium styrenesulfonate was used instead of sodium styrene sulfonate and ethoxy diethylene glycol acrylate in production of the water-soluble polymer and that the pH of the CNT dispersion liquid was adjusted to 8.5 in production of the CNT dispersion liquid. The results are shown in Table 1.

(Comparative Example 2)

Various operations, measurements, and evaluations were performed in the same way as in Example 1 with the exception that 25 parts of acrylic acid and 75 parts of acrylamide were used instead of isoprene and methacrylic acid in production of the water-soluble polymer and that the amounts of the CNTs and the water-soluble polymer that were used in

production of the CNT dispersion liquid were changed such that the solid content concentration of the CNTs and the solid content concentration of the water-soluble polymer were each 0.75% in the CNT dispersion liquid. The results are shown in Table 1.

(Comparative Example 3)

Various operations, measurements, and evaluations were performed in the same way as in Example 1 with the exception that 49 parts of sodium styrene sulfonate, 24 parts of acrylic acid, and 27 parts of acrylamide were used instead of isoprene and methacrylic acid in production of the water-soluble polymer and that the amounts of the CNTs and the water-soluble polymer that were used in production of the CNT dispersion liquid were changed such that the solid content concentration of the CNTs and the solid content concentration of the water-soluble polymer were each 0.75% in the CNT dispersion liquid. The results are shown in Table 1.

(Comparative Example 4)

Various operations, measurements, and evaluations were performed in the same way as in Example 1 with the exception that the slurry for a negative electrode was produced using, as a CNT dispersion liquid, a CNT dispersion liquid that contained multi-walled CNTs (average diameter: 10 nm; G/D ratio: 0.8; polarity term $\delta_{p1}$ = 7.0; dispersion term $\delta_{d1}$ = 18.5; hydrogen bonding term $\delta_{h1}$ = 4.8), a sodium salt of carboxymethyl cellulose (dispersant), and deionized water (solid content concentration of CNTs = 1%; solid content concentration of carboxymethyl cellulose sodium salt = 1%; pH = 8.0). The results are shown in Table 1.

(Comparative Example 5)

Various operations, measurements, and evaluations were performed in the same way as in Comparative Example 4 with the exception that single-walled CNTs (average diameter: 3 nm; G/D ratio: 5) were used instead of multi-walled CNTs in production of the CNT dispersion liquid. The results are shown in Table 1.

(Comparative Example 6)

Production of a CNT dispersion liquid was attempted in the same way as in Example 1 with the exception that a water-soluble polymer was not produced and that water-insoluble hydrogenated nitrile rubber produced as described below was used instead of a water-soluble polymer. However, it was not possible to disperse the multi-walled CNTs or to produce a CNT dispersion liquid that could be used in formation of a negative electrode mixed material layer. Therefore, the various evaluations were not performed.

<Production of hydrogenated nitrile rubber>

A reactor having an internal capacity of 10 L was charged with 100 parts of deionized water and 23 parts of acrylonitrile, 30 parts of 1,3-butadiene, 4 parts of methacrylic acid, and 43 parts of styrene as monomers. Moreover, 2 parts of potassium oleate as an emulsifier, 0.1 parts of potassium phosphate as a stabilizer, and 0.5 parts of 2,2',4,6,6'-pentamethylheptane-4-thiol (TIBM) as a molecular weight modifier were added thereto, and emulsion polymerization was performed at 30°C in the presence of 0.35 parts of potassium persulfate as a polymerization initiator so as to copolymerize the above-described monomers.

At the point at which the polymerization conversion rate reached 90%, 0.2 parts of hydroxylamine sulfate was added per 100 parts of monomers to stop the polymerization. Next, heating was performed and then steam distillation was performed under reduced pressure at approximately 70°C to recover residual monomer. Thereafter, 2 parts of an alkylated phenol was added as an antioxidant to yield a water dispersion of a polymer.

Next, 400 mL of the obtained water dispersion of the polymer (total solid content: 48 g) was loaded into a 1 L autoclave equipped with a stirrer, and nitrogen gas was passed for 10 minutes so as to remove dissolved oxygen in the water dispersion. Thereafter, 50 mg of palladium acetate as a hydrogenation reaction catalyst was dissolved in 180 mL of water to which 4 molar equivalents of nitric acid relative to Pd had been added and was then added into the autoclave. The system was purged twice with hydrogen gas, and then the contents of the autoclave were heated to 50°C in a state in which the pressure was raised to 3 MPa (gauge pressure) with hydrogen gas, and a hydrogenation reaction was performed for 6 hours. Thereafter, the contents were restored to normal temperature, the system was converted to a nitrogen atmosphere, and then concentrating was performed to a solid content concentration of 40% using an evaporator to yield hydrogenated nitrile rubber. The obtained hydrogenated nitrile rubber was water-insoluble.

(Comparative Example 7)

Various operations, measurements, and evaluations were performed in the same way as in Example 2 with the exception that only acrylic acid was used instead of isoprene and methacrylic acid in production of the water-soluble polymer. The results are shown in Table 1.

Note that in Table 1:

"MW" indicates multi-walled CNTs;
"SW" indicates single-walled CNTs;
"IP" indicates isoprene unit;
"MAA" indicates methacrylic acid unit;
"SS" indicates sodium styrene sulfonate unit;
"EC-A" indicates ethoxy diethylene glycol acrylate unit;
"EA" indicates ethyl acrylate unit;
"AA" indicates acrylic acid unit;
"AAm" indicates acrylamide unit;
"CMC" indicates sodium salt of carboxymethyl cellulose;
"HNBR" indicates hydrogenated nitrile rubber;
"Li" indicates lithium salt group;
"Na" indicates sodium salt group;
"K" indicates potassium salt group; and
"LIB" indicates lithium ion secondary battery.

[Table 1]

| | | | Examples | | | | | | | | | | | | Comparative examples | | | | | | |
|---|---|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 1 | 2 | 3 | 4 | 5 | 6 | 7 |
| CNTs | Type | | MW | MW | SW | MW | SW | MW | MW | MW | MW | SW | MW | SW | MW | MW | MW | MW | SW | MW | MW |
| | HSP values [MPa$^{1/2}$] | $\delta_{d1}$ | 18.5 | 18.5 | 19.4 | 18.5 | 19.4 | 18.5 | 18.5 | 18.5 | 18.5 | 19.4 | 18.5 | 19.4 | 18.5 | 18.5 | 18.5 | 18.5 | 19.4 | 18.5 | 18.5 |
| | | $\delta_{p1}$ | 7.0 | 7.0 | 6.0 | 7.0 | 6.0 | 7.0 | 7.0 | 7.0 | 7.0 | 6.0 | 7.0 | 6.0 | 7.0 | 7.0 | 7.0 | 7.0 | 6.0 | 7.0 | 7.0 |
| | | $\delta_{h1}$ | 4.8 | 4.8 | 4.5 | 4.8 | 4.5 | 4.8 | 4.8 | 4.8 | 4.8 | 4.5 | 4.8 | 4.5 | 4.8 | 4.8 | 4.8 | 4.8 | 4.5 | 4.8 | 4.8 |
| Water-soluble polymer (dispersant) | Type | Monomer type | IP/MAA | IP/MAA | IP/MAA | SS/EC-A | SS/EC-A | SS/EC-A | SS/EC-A | SS/EC-A | IP/MAA | IP/MAA | EA/MAA | EA/MAA | SS | AA/AAm | SS/AA/AAm | CMC | CMC | HNBR | AA |
| | | Monomer ratio (weight ratio) | 42/58 | 42/58 | 42/58 | 59/41 | 59/41 | 59/41 | 59/41 | 77/23 | 42/58 | 42/58 | 70/30 | 70/30 | 100 | 25/75 | 49/24/27 | | | | 100 |
| | | Monomer ratio (mole ratio) | 48/52 | 48/52 | 48/52 | 57/43 | 57/43 | 57/43 | 57/43 | 75/25 | 48/52 | 48/52 | 67/33 | 67/33 | 100 | 25/75 | 25/35/40 | | | | 100 |
| | HSP values [MPa$^{1/2}$] | $\delta_{d2}$ | 18.3 | 18.3 | 18.3 | 18.4 | 18.4 | 18.4 | 18.4 | 18.2 | 18.3 | 18.3 | 18.8 | 18.8 | 17.8 | 21.9 | 20.5 | 19.9 | 19.9 | 18.4 | 19.9 |
| | | $\delta_{p2}$ | 3.5 | 3.5 | 3.5 | 7.7 | 7.7 | 7.7 | 7.7 | 9.1 | 3.5 | 3.5 | 4.0 | 4.0 | 11.1 | 13.5 | 11.5 | 11.4 | 11.4 | 8.2 | 7.0 |
| | | $\delta_{h2}$ | 6.7 | 6.7 | 6.7 | 9.5 | 9.5 | 9.5 | 9.5 | 11.3 | 6.7 | 6.7 | 6.4 | 6.4 | 13.7 | 12 | 12.9 | 16.8 | 16.8 | 5.6 | 14.3 |
| | Property | | Water-soluble | Water-soluble | Water-soluble | Water-soluble | Water-soluble | Water-soluble | Water-soluble | Water-soluble | Water-soluble | Water-soluble | Water-soluble | Water-soluble | Water-soluble | Water-soluble | Water-soluble | Water-soluble | Water-soluble | Water-insoluble | Water-soluble |
| | Type of salt of acid functional group | | Li | Li | Li | Na/Li | Na/Li | Na/Li | Na/Li | Na/Li | Na | Li | Na | Na | Na/Li | Li | Na/Li | Na | Na | K | Li |
| CNT dispersion liquid | Solid content concentration of CNTs [%] | | 1 | 1 | 1 | 1 | 1 | 1 | 1 | 1 | 1 | 0.4 | 1 | 0.4 | 1 | 0.75 | 0.75 | 1 | 1 | 1 | 1 |
| | Solid content concentration of water-soluble polymer [%] | | 0.3 | 1 | 0.3 | 0.3 | 0.3 | 0.3 | 0.3 | 0.3 | 0.3 | 1 | 0.3 | 1 | 0.3 | 0.75 | 0.75 | 1 | 1 | 1 | 1 |
| | Mass ratio of CNTs relative to water-soluble polymer | | 3.3 | 1.0 | 3.3 | 3.3 | 3.3 | 3.3 | 3.3 | 3.3 | 3.3 | 0.4 | 3.3 | 0.4 | 3.3 | 1.0 | 1.0 | 1.0 | 1.0 | 1.0 | 1.0 |
| | pH | | 8.0 | 8.0 | 8.0 | 7.7 | 7.7 | 4.0 | 12.0 | 12.0 | 8.0 | 8.0 | 8.0 | 8.0 | 8.5 | 8.0 | 8.0 | 8.0 | 8.0 | - | 8.0 |
| | HSP distance ($R_a$) [MPa$^{1/2}$] | | 4.0 | 4.0 | 4.0 | 4.8 | 5.6 | 4.8 | 4.8 | 6.9 | 4.0 | 4.0 | 3.5 | 3.1 | 9.9 | 11.8 | 10.1 | 13.1 | 13.5 | 1.5 | 9.9 |
| | HSP distance ($R_b$) [MPa$^{1/2}$] | | 7.2 | 7.2 | 7.2 | 3.9 | 3.9 | 3.9 | 3.9 | 4.7 | 7.2 | 7.2 | 6.8 | 6.8 | 6.9 | 8.7 | 7.1 | 10.2 | 10.2 | 2.9 | 8.6 |
| Slurry | HSP distance ($R_c$) [MPa$^{1/2}$] | | 4.2 | 4.2 | 4.2 | 5.1 | 5.1 | 5.1 | 5.1 | 7.3 | 4.2 | 4.2 | 3.4 | 3.4 | 10.3 | 11.5 | 10.0 | 13.2 | 13.2 | 2.1 | 9.9 |
| Evaluation results | CNT dispersion liquid | Dispersibility | S | A | A | A | B | A | A | B | A | S | A | A | C | C | C | C | C | - | C |
| | | Storage stability | A | B | A | A | B | A | A | B | A | A | A | A | C | C | C | C | C | - | C |
| | Slurry | Viscosity stability | A | A | A | A | A | C | B | B | A | A | A | A | D | C | C | B | B | - | C |
| | LIB | Cycle characteristics | A | A | A | A | A | C | B | B | A | A | A | A | C | B | B | D | B | - | D |

It is clear from Table 1 that the CNT dispersion liquids of Examples 1 to 9 have excellent CNT dispersibility and storage stability.

INDUSTRIAL APPLICABILITY

According to the present disclosure, it is possible to provide a CNT dispersion liquid having excellent CNT dispersibility and storage stability.

Moreover, according to the present disclosure, it is possible to provide a slurry for a non-aqueous secondary battery negative electrode containing this CNT dispersion liquid.

Furthermore, according to the present disclosure, it is possible to provide a negative electrode for a non-aqueous secondary battery for which this slurry for a non-aqueous secondary battery negative electrode is used.

Also, according to the present disclosure, it is possible to provide a non-aqueous secondary battery including this negative electrode for a non-aqueous secondary battery.

## Claims

1. A carbon nanotube dispersion liquid comprising: carbon nanotubes; a water-soluble polymer including an acid functional group; and water, wherein an HSP distance ($R_a$) between Hansen solubility parameters ($HSP_c$) of the carbon nanotubes and Hansen solubility parameters ($HSP_d$) of the water-soluble polymer is 7.0 $MPa^{1/2}$ or less.

2. The carbon nanotube dispersion liquid according to claim 1, wherein an HSP distance ($R_b$) between the Hansen solubility parameters ($HSP_d$) of the water-soluble polymer and Hansen solubility parameters ($HSP_m$) of a material having a polarity term $\delta_{p3}$ of 10.7 $MPa^{1/2}$, a dispersion term $\delta_{d3}$ of 18.6 $MPa^{1/2}$, and a hydrogen bonding term $\delta_{h3}$ of 7.0 $MPa^{1/2}$ is 8.0 $MPa^{1/2}$ or less.

3. The carbon nanotube dispersion liquid according to claim 1 or 2, having a pH of not lower than 6 and not higher than 10.

4. The carbon nanotube dispersion liquid according to any one of claims 1 to 3, wherein the acid functional group of the water-soluble polymer is at least partially in the form of an alkali metal salt group or an ammonium salt group.

5. The carbon nanotube dispersion liquid according to any one of claims 1 to 4, wherein the acid functional group is a carboxy group.

6. The carbon nanotube dispersion liquid according to any one of claims 1 to 4, wherein the acid functional group is a sulfo group.

7. The carbon nanotube dispersion liquid according to any one of claims 1 to 6, wherein the water-soluble polymer includes an ether group.

8. The carbon nanotube dispersion liquid according to any one of claims 1 to 7, wherein a mass ratio of the carbon nanotubes relative to the water-soluble polymer is not less than 0.1 and not more than 10.

9. A slurry for a non-aqueous secondary battery negative electrode comprising: a negative electrode active material; and the carbon nanotube dispersion liquid according to any one of claims 1 to 8.

10. The slurry for a non-aqueous secondary battery negative electrode according to claim 9, wherein the negative electrode active material includes a silicon-based negative electrode active material.

11. The slurry for a non-aqueous secondary battery negative electrode according to claim 9 or 10, further comprising a particulate polymer, wherein the particulate polymer includes a carboxy group-containing monomer unit, an aromatic vinyl monomer unit, and a conjugated diene monomer unit.

12. The slurry for a non-aqueous secondary battery negative electrode according to claim 11, wherein proportional content of the carboxy group-containing monomer unit in the particulate polymer when all repeating units included in the particulate polymer are taken to be 100 mass% is not less than 3 mass% and not more than 30 mass%.

13. The slurry for a non-aqueous secondary battery negative electrode according to claim 11 or 12, wherein an HSP

distance ($R_c$) between the Hansen solubility parameters ($HSP_d$) of the water-soluble polymer and Hansen solubility parameters ($HSP_b$) of the particulate polymer is 7.0 $MPa^{1/2}$ or less.

**14.** A negative electrode for a non-aqueous secondary battery comprising:

a current collector; and
a negative electrode mixed material layer formed on the current collector using the slurry for a non-aqueous secondary battery negative electrode according to any one of claims 9 to 13.

**15.** The negative electrode for a non-aqueous secondary battery according to claim 14, wherein the current collector is electrolytic copper foil.

**16.** A non-aqueous secondary battery comprising the negative electrode for a non-aqueous secondary battery according to claim 14 or 15.

## INTERNATIONAL SEARCH REPORT

International application No.
**PCT/JP2023/001577**

**A. CLASSIFICATION OF SUBJECT MATTER**

***C01B 32/174***(2017.01)i; ***C08K 3/013***(2018.01)i; ***C08K 3/04***(2006.01)i; ***C08K 7/06***(2006.01)i; ***C08L 101/06***(2006.01)i; ***C08L 101/08***(2006.01)i; ***H01B 1/04***(2006.01)i; ***H01M 4/13***(2010.01)i; ***H01M 4/134***(2010.01)i; ***H01M 4/62***(2006.01)i; ***H01M 4/66***(2006.01)i

FI: C01B32/174; C08K3/013; C08K3/04; C08K7/06; C08L101/06; C08L101/08; H01B1/04; H01M4/13; H01M4/134; H01M4/62 Z; H01M4/66 A

According to International Patent Classification (IPC) or to both national classification and IPC

**B. FIELDS SEARCHED**

Minimum documentation searched (classification system followed by classification symbols)

C01B32/00-32/991; C08K3/00-13/08; C08L1/00-101/14; H01B1/00-1/24; H01M4/00-4/84

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | CN 102875722 A (SICHUAN ZHIJIANG CHEMICAL NEW MATERIAL CO., LTD.) 16 January 2013 (2013-01-16)<br>entire text | 1-16 |
| A | CN 103985841 A (MCNAIR TECHNOLOGY CO., LTD.) 13 August 2014 (2014-08-13)<br>entire text | 1-16 |
| A | CN 109721673 A (BEIJING WELION NEW ENERGY TECHNOLOGY CO., LTD.) 07 May 2019 (2019-05-07)<br>entire text, all drawings | 1-16 |
| A | JP 2019-212489 A (KAO CORPORATION) 12 December 2019 (2019-12-12)<br>entire text | 1-16 |
| A | JP 2020-019924 A (TOYO INK SC HOLDINGS CO., LTD.) 06 February 2020 (2020-02-06)<br>entire text | 1-16 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 March 2023** | **04 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**

International application No.
**PCT/JP2023/001577**

**C. DOCUMENTS CONSIDERED TO BE RELEVANT**

| Category* | Citation of document, with indication, where appropriate, of the relevant passages | Relevant to claim No. |
|---|---|---|
| A | JP 2006-225632 A (MITSUBISHI RAYON CO., LTD.) 31 August 2006 (2006-08-31)<br>entire text | 1-16 |
| A | JP 2009-062461 A (DAINICHISEIKA COLOR & CHEMICALS MFG. CO., LTD.) 26 March 2009 (2009-03-26)<br>entire text | 1-16 |
| A | JP 2019-119775 A (ORK TREES INC.) 22 July 2019 (2019-07-22)<br>entire text, all drawings | 1-16 |
| A | WO 2013/042482 A1 (TOSOH ORGANIC CHEMICAL CO.,LTD.) 28 March 2013 (2013-03-28)<br>entire text, all drawings | 1-16 |
| A | WO 2020/004145 A1 (ZEON CORP.) 02 January 2020 (2020-01-02)<br>entire text | 1-16 |
| A | LUO, Yanlong et al. Molecular Dynamics Simulation Study on Two-Component Solubility Parameters of Carbon Nanotubes and Precisely Tailoring the Thermodynamic Compatibility between Carbon Nanotubes and Polymers. Langmuir. 27 July 2020, vol. 36, no. 31, pp. 9291-9305, DOI: 10.1021/acs.langmuir.0c01736<br>entire text, all drawings | 1-16 |
| A | JP 2020-164354 A (THE NATIONAL INSTITUTE OF ADVANCED INDUSTRIAL SCIENCE AND TECHNOLOGY) 08 October 2020 (2020-10-08)<br>entire text, all drawings | 1-16 |
| A | WO 2021/095600 A1 (NATIONAL UNIVERSITY CORPORATION NARA INSTITUTE OF SCIENCE AND TECHNOLOGY) 20 May 2021 (2021-05-20)<br>entire text, all drawings | 1-16 |

Form PCT/ISA/210 (second sheet) (January 2015)

**INTERNATIONAL SEARCH REPORT**
**Information on patent family members**

International application No.
**PCT/JP2023/001577**

| Patent document cited in search report | Publication date (day/month/year) | Patent family member(s) | Publication date (day/month/year) |
|---|---|---|---|
| CN 102875722 A | 16 January 2013 | (Family: none) | |
| CN 103985841 A | 13 August 2014 | (Family: none) | |
| CN 109721673 A | 07 May 2019 | (Family: none) | |
| JP 2019-212489 A | 12 December 2019 | (Family: none) | |
| JP 2020-019924 A | 06 February 2020 | (Family: none) | |
| JP 2006-225632 A | 31 August 2006 | US 2008/0281014 A1<br>entire text<br>WO 2006/028200 A1<br>CN 101001912 A<br>KR 10-2007-0050408 A | |
| JP 2009-062461 A | 26 March 2009 | (Family: none) | |
| JP 2019-119775 A | 22 July 2019 | (Family: none) | |
| WO 2013/042482 A1 | 28 March 2013 | (Family: none) | |
| WO 2020/004145 A1 | 02 January 2020 | US 2021/0218030 A1<br>entire text<br>EP 3817107 A1<br>CN 112136236 A<br>KR 10-2021-0021975 A | |
| JP 2020-164354 A | 08 October 2020 | (Family: none) | |
| WO 2021/095600 A1 | 20 May 2021 | CN 114728796 A<br>KR 10-2022-0100572 A<br>TW 202118731 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021200126 A1
- JP 6860740 B
- JP 2012204303 A


### Non-patent literature cited in the description


- *Hansen Solubility Parameters 50th anniversary conference*, 2017, 14-21